# EUROPÄISCHE PATENTSCHRIFT

(11) **EP 0 638 245 B1**
(45) Veröffentlichungstag und Bekanntmachung des Hinweises auf die Patenterteilung: **15.10.1997**
(21) Anmeldenummer: 94111377.1
(22) Anmeldetag: 20.07.1994
(51) Int. Cl.: A23P 1/12, B30B 11/22

(54) **Kochextruder zur Herstellung von thermisch behandelten Biopolymeren sowie Verfahren zum Kochextrudieren von Biopolymeren**
Cooker-extruder for the production of thermally treated bio-polymers as well as method for cooker-extrusion of bio-polymers
Cuiseur extrudeur pour la fabrication des biopolymères traités thermiquement ainsi que procédé de cuiseur extrusion des biopolymères

(30) Priorität: 29.07.1993 DE 4325514
(43) Veröffentlichungstag der Anmeldung: 15.02.1995
(73) Patentinhaber: SCHAAF TECHNOLOGIE GMBH, D-65520 Bad Camberg (DE)
(72) Erfinder: Schaaf, Heinz, D-65520 Bad Camberg (DE)
(74) Vertreter: Lewald, Dietrich, Dipl.-Ing.

(56) Entgegenhaltungen:
- EP-A- 0 163 619
- DE-B- 1 011 140
- GB-A- 2 191 378

## Beschreibung

Die Erfindung betrifft Kochextruder mit Beschickungstrichter sowie einer einzigen Schnecke und Düse oder in der Ausbildung als Doppelschneckenextruder, zur Herstellung von thermisch behandelten Biopolymeren.

Gegenstand der Erfindung sind auch Verfahren zum Kochextrudieren von Biopolymeren zur Herstellung von thermisch behandelten Nahrungsmittelgranulaten, Snackprodukten, Cerealien oder dergleichen.

Solche Kochextruder und Verfahren zum Kochextrudieren, gemäß den einleitenden Teilen der Ansprüche 1, 23 und 25 (Kochextruder) und 26, 32 und 33 (Verfahren), sind aus EP 0 221 918 B1 bekannt.

Allgemeine Ausführungen über Kochextruder finden sich im übrigen in Judson M. Harper "Extrusion of Foods", 1981, CRC Press, Inc. Boca Raton, Florida, USA, sowie Mercier, Linko, Harper "Extrusion Cooking", 1989, American Association of Cereal Chemists, Inc. St. Paul, Minnesota, USA.

Die Anforderungen an einen Kochextruder für Biopolymere lassen sich wie folgt zusammenfassen:
hohe Durchsatzleistung gepaart mit hoher Produktqualität, die bestimmt wird durch konstante Verfahrensbedingungen, gute Homogenisierung (Vermischung), definierte Temperaturführung, gute Ausformbarkeit des Teiges sowie geringe Investitionskosten, geringe Unterhaltskosten und flexible Verfahrensgestaltung und schließlich gute Steuerbarkeit bei schneller Reaktionszeit und einfacher Handhabung, insbesondere bei der Inbetriebsetzung, Demontage und Reinigung.

Aus der GB-PS 2 191 378 ist ein Extruder (kein Kochextruder) bekanntgeworden, der bei Umgebungstemperaturen oder etwas darüber arbeitet und ein Meerespastenprodukt (Fischbasis) erzeugt. Rotierende Blätter sind vorgesehen, deren Grundfunktion ein Rühren/Mischen in der Maschine ist. Materialien werden aus Formen oder Querköpfen extrudiert und erleiden eine Scherwirkung. Irgendein Kochen findet in einem solchen Extruder nicht statt. Hat das Material einmal die Düse verlassen, so wird es einem weiteren Preßformverfahren einschließlich Bedampfung, Backen, Frittieren mit Öl und Kochen ausgesetzt.

Gegenüber Doppelschneckenextrudern haben Einschneckenextruder, ein solcher wird auch hier vorgestellt, erhebliche Vorteile, da erstere kompliziert im Aufbau sind, erheblich mehr Verschleißteile aufweisen und somit zu höheren Unterhaltskosten beitragen.

Demgegenüber sagt man Einschnecken-Maschinen geringere Flexibilität nach, insbesondere wird vielfach unreproduzierbare Temperaturführung und schlechtere Mischwirkung/Homogenisierung kritisiert.

Bei Kochextrudern der eingangs genannten Art liegt der Erfindung die Aufgabe zugrunde, das Verhalten eines solchen Kochextruders überraschend hinsichtlich der Homogenisierung sowie hinsichtlich der Textur des Endproduktes, die gleichmäßiger sein soll, hinsichtlich ausreichender und steuerbarer Expansion sowie Steuerbarkeit der Temperatur mittels des Verhältnisses Massestrom/-Schneckendrehzahl, zu verbessern. Auch soll der häufig negative Einfluß von Fett und/oder Zucker in der Rohstoffmischung auf die Textur des Endproduktes vermindert werden.

Erreicht wird dies erfindungsgemäß bei einem Kochextruder gemäß Ansprüche 1, 23 und 25 zur Herstellung von thermisch behandelten Biopolymeren.

Bevorzügte Ausführungen der Erfindung sind in den abhängigen Ansprüchen beschrieben.

Bei einer einzigen Spachtelpumpe wird bei dem Einschneckenextruder ausgenutzt, daß die Gangenden am Ausgang der Schnecke keilförmig gestaltet werden und die Schnecke mit geringem Abstand zu einer Lochplatte rotieren gelassen wird. Diese Kombination der keilförmigen Enden der Extruderschnecke mit der Maßnahme nach der Erfindung, insbesondere der Zuordnung einer Lochplatte löst ebenfalls die oben genannte Aufgabe.

Vorzugsweise sind wenigstens zwei solcher Spachtelpumpen zwischen Schnecke und Düse zwischengeschaltet.

Dadurch, daß man einen konventionellen kurzen Einschneckenextruder, beispielsweise mit einem Verhältnis von Länge zu Durchmesser L:D von z.B. 2:1, dessen Schnecken-Stirnfläche bereits spachtelförmig ausgebildet ist und über eine Lochplatte streicht, durch eine oder mehrere Spachtelpumpen der oben definierten Art ergänzt, die jeweils aus einem oder mehreren Spachtelelementen und einer Lochplatte bestehen, wird überraschend nicht nur die oben genannte Aufgabe erfüllt, es wird auch folgendes erreicht:
Die Homogenisierung wird verbessert, die Textur des Endproduktes wird gleichmäßiger.
Der Teig tritt gleichmäßiger aus den Düsen aus.
Trotz sehr geringer Verweilzeit (kleiner 8 Sekunden) kann erheblich mehr Fett und/oder Zucker verarbeitet werden bei ausreichender Expansion (üblicherweise führt das Vorhandensein von Fett und/oder Zucker zu stark verminderter Expansion).
Die Steuerbarkeit der Temperatur mittels des Verhältnisses der Prozessvariablen Massestrom: Schneckendrehzahl wird erheblich vergrößert, d.h. eine höhere Schneckendrehzahl, bei konstantem Massestrom liefert eine deutlich höhere Teigtemperatur als bei vergleichbarem Gerät ohne zusätzliche Spachtelpumpe und umgekehrt, bzw. eine Erhöhung des Massestroms. Damit wird eine relative Verringerung der spezifischen mechanischen Energieeinleitung ermöglicht, das Verhältnis von Schneckendrehzahl zu Teigtemperatur wird ganz erheblich linearisiert.

Die Durchsatzleistung liegt mit mindestens einer zusätzlichen Spachtelpumpe, bei gleicher Produktqualität um bis zu 100 % höher als bei einer Maschine ohne zusätzliche Spachtelpumpe.

Durch die materialgeschmierte Zentrierung der Extruderschnecke am Durchgang durch die Lochmatrize werden die Radialkräfte aufgenommen und durch die bessere Zentrierung Kontakt zwischen Schnecke und Extruderzylinder verhindert. Der Verschleiß dieser Teile wird somit verringert.

Die Bauteile für eine solche Spachtelpumpe sind sehr einfach im Aufbau, preiswert herzustellen und nur geringem Verschleiß unterworfen.
Durch Anordnung mehrerer Spachtelpumpen-Stufen hintereinander können die Prozeßbedingungen sehr flexibel den Produkterfordernissen angepaßt werden.
Der Zusammenbau, die Demontage und die Reinigung dieser Teile ist sehr einfach und schnell.
Die Gestaltung der Elemente "Spachtelkopf" (Breite und Anstellwinkel der Spachtelfläche zur Lochmatrize) und "Lochmatrize" (Anzahl und Durchmesser der Bohrungen sowie die Dicke der Platte) gemäß den bekannten Regeln der Strömungslehre führt zu beliebigen spezifischen Konfigurationen entsprechend den erforderlichen Prozeßbedingungen (Rohstoff-Feuchte, Temperatur, Viskosität, Verweilzeit, erforderlicher Druck zur Düsenpassage etc.) und dies in kostengünstiger Weise.

Insbesondere können die die Lochplatte bzw. Lochplatten überstreichenden Spachtelarme der quirlartigen Spachtelpumpe, die von der Drehachse des "Quirls" abstehen bzw. senkrecht abstehen, über runden Querschnitt verfügen und als zylindrische oder kegelförmige Rolle ausgebildet sein, wie später erläutert wird.

Die Konzeption der Lochmatrizen bringt es mit sich, daß eine große Gesamtoberfläche der mit dem Medium in Kontakt kommenden Metallflächen vorhanden ist. Diese gegenüber konventionellen Extruderbauweisen (meist ausschließlich über den Extruderzylinder) größere Oberfläche ist von großem Vorteil für eventuell gewünschte Wärmeübertragung (Kühlen oder Heizen), beispielsweise durch in der Lochmatrize vorhandene Kanäle, durch welche z.B. Dampf/Kühlwasser oder Wärmeträger-Öl geleitet wird.
Durch das überraschende Verhalten der Spachtelpumpen kann gezeigt werden, daß sich die Extruderschnecke in ihrer Funktion auf eine einfache Zufuhrschnecke zur Vorverdichtung reduzieren läßt, auf die Extruderschnecke vielleicht sogar ganz verzichtet werden kann, wenn beispielsweise der Spachtelextruder vertikal angeordnet wird und der Rohstoff direkt einer vorzugsweise mehrstufigen Spachtelpumpe zugeführt wird.

Die Spachtelelemente können über eine Welle miteinander und mit der Schnecke verbunden werden. Sofern die Eigenschaften des Teigs eine druckseitige Rotationsabdichtung erlauben, ist sogar ein von der Schnecke unabhängiger Antrieb einer oder mehrerer Spachtelpumpen möglich.

Interessant ist, daß der Kochextruder nur aus einer Aneinanderreihung sog. Spachtelpumpen aufgebaut sein kann, wobei der Spachtelextruder vorzugsweise im wesentlichen vertikal angeordnet ist. Man kann somit ganz auf die Extruderschnecke verzichten.

Ein ganz wichtiger Vorteil der Erfindung ist darin zu sehen, daß die Extruderwerkzeuge, insbesondere der Extrusionszylinder, gegebenenfalls die Schnecke, die Lochmatrize, die Spachtelelemente sowie die Düse etc. aus Stahl, Gußeisen oder einem anderen nahrungsmittelmäßig unbedenklichen Material bestehen können, also nicht die zum Härten und Verschleißschutz üblichen Schwermetalle und Zusätze enthalten müssen. Durch Verschleiß bewirkte Maßänderungen im Vergleich zu konventioneller Bauweise haben nur einen vernachlässigbaren Einfluß auf den Prozeß, speziell den Durchsatz. Bei bekannten Schneckenmaschinen konnte eine durch Verschleiß bewirkte Vergrößerung des Spalts zwischen Schnecke und Zylinder von wenigen zehntel Millimeter bereits eine Leistungseinbuße von 30-40% bewirken bzw. die Energieeinleitung in den Teig unzulässig vergrößern.

Nach einer besonderen konstruktiven Ausführungsform der Erfindung, die entscheidende Vorteile bringt, können die Lochmatrizen anströmseitig als Kugelkalotte und das oder die zugeordnete(n) Spachtelelement(e) komplementär der Kugelkalotte unmittelbar gegenüberstehend und der Kontur der Kugelkalotte folgend ausgebildet sein.

Gegenstand der Erfindung ist auch das Verfahren gemäß den Ansprüchen 26, 32 und 33.

Vorzugsweise kann mit einem Prozeßvolumen von nur etwa 200 cm³ pro Spachtelpumpenstufe bei einem Massenstrom von 200 bis 350 kg/h und einer hieraus folgenden Verweilzeit von 2 bis 4 Sekunden gearbeitet werden.

Bekannt sind zwar sog. Pelletpressen, die zur Verdichtung von mehlförmigen, granulierten oder faserförmigen Stoffen eingesetzt werden und Pellets, also ein verdichtetes granuliertes Material erzeugen. Diese werden schon mit rotierenden Ringmatrizen, aber auch mit feststehenden Ringmatrizen und rotierenden Werkzeugen oder scheibenförmigen Matrizen und kegelförmigen oder zylindrischen Preßrollen gebaut. Dies hat jedoch mit dem Gebiet, auf dem die Erfindung liegt, nichts zu tun, da erfindungsgemäß keine Pellets hergestellt werden sollen. Solche Pelletpressen vermeiden natürlich tunlichst einen Druckaufbau nach Durchgang durch die erste Preßstufe. Ziel ist ja ein verdichtetes Granulat und nicht wie bei der Kochextrusion eine möglichst homogene Masse, welche dann gegebenenfalls durch Verdampfen von Wasser eine poröse knusprige Textur erhält.

Erfindungsgemäß wird dem Material bei Austritt aus der Matrize ein Druck entgegengesetzt, der das Material zu einer flüssigen Masse verdichtet, diese Masse wird gegebenenfalls einer weiteren Spachtelstufe (wegen der nunmehr fluiden Eigenschaft des Materials ist die Bezeichnung "Pumpe" bevorzugt) zugeführt - Prozeß gegebenenfalls mehrfach wiederholbar - entweder um durch die Verarbeitung eine weitere Vermischung/Homogenisierung zu erreichen oder um höhere Enddrücke zum Durchdrücken durch Düsen aufzubauen.

Entscheidend ist das Zusammenwirken zweier hintereinander geschalteter Spachtelpumpenstufen bzw. zwischen einem dem Spachtelkopf ähnlich ausgebildeten Ende der Extruderschnecke und einer Lochmatrize und einer weiteren Spachtelstufe.

Zweckmäßig ist es, im Bereich der Lochmatrize das verflüssigte Material in oszillierende Bewegung zu versetzen. Dies wird beispielsweise dadurch erreicht, daß nach Vorbeistreichen des Spachtelelements durch den ausgangsseitigen hohen Druck ein Teil des in den fluiden Zustand überführten Materials wieder durch die Lochmatrize zurückströmt. Zumindest kann man sich dies so vorstellen.

Die bewußten Druckschwankungen, die zu oszillierenden Bewegungen führen, können natürlich auch durch andere bekannte Mittel wie Membrane oder Kolben hervorgerufen sein. Schließlich ist dies auch durch Exzenter, durch Pulsationen oder durch Ultraschall zu bewerkstelligen.

Zwischen der ersten und der zweiten "Spachtelstufe" befindet sich also noch komprimiertes, im Aggregatzustand "fast flüssig" oder "flüssig" befindliches Material, welches zwar noch Feststoffpartikel oder Feststoffschlieren enthalten kann, dessen Hauptphase jedoch flüssig ist.

Zweckmäßig baut sich in Bewegungsrichtung vor dem rotierenden Spachtelflügel ein hoher Druck auf, hinter dem Spachtelflügel ist der Druck niedrig. Der Teig erfährt eine oszillierende Fließrichtung und einen oszillierenden Druck. Zweckmäßig wird zwischen der ersten und der zweiten Stufe ein mittlerer Druck aufrecht erhalten, der größer als 10 bar ist.

Ist nur eine Stufe vorhanden, so ist die Matrize nicht gleich Düse, vielmehr sind weitere Stauelemente sowie die Düse notwendig, um den geforderten Druck aufzubauen.

Die erkannten Wechselwirkungen können in einen sinnvollen Bezug zu den Prozeß- und Produkterfordernissen gesetzt werden.

Form der Spachtelfläche: diese kann gerade, gekrümmt, aber auch z.B. zylindrisch oder kugelförmig oder profiliert rotierend sein. Unter "rotierend" wird eine beispielsweise quirlartige Ausbildung verstanden, wobei um beispielsweise eine Achse der Quirl rotiert und die Quirlarme selbst (senkrecht zur Antriebsachse) sich drehen, beispielsweise in Form von Walzenkörpern.

Anstellwinkel der Spachtelfläche zur Lochmatrize: wird kleiner als 90° und größer als 0° gewählt. Nimmt man einen kleinen Winkel, so ergibt sich ein geringer Durchsatz und hoher Druck, bei großem Winkel ergibt sich ein großer Durchsatz und ein geringer Druck. Die Oberflächenbeschaffenheit der Spachtelfläche, wenn optimale Förderung gewünscht ist, ist dann möglichst glatt, gegebenenfalls beschichtet. Dadurch stellt sich eine geringere Reibung, wenn nicht Gleiten ein. Im Gegensatz dazu ist dann die Oberfläche der Lochmatrize möglichst rauh, was zu hoher Reibung führt. Dies wird bereits durch die Bohrungen erreicht, kann jedoch darüber hinaus durch geeignete Maßnahmen verstärkt werden.

Dicke der Lochplatte/Lochmatrize: wird eine große Dicke gewählt, so ergibt sich ein großer Fließwiderstand, eine hohe Materialscherung, eine hohe Energiedissipation sowie eine hohe Teigtemperatur und umgekehrt.

Anzahl der Bohrungen: viele Bohrungen bedeuten geringen Widerstand und hohen Durchsatz an der Lochmatrize.

Durchmesser der Bohrungen: großer Durchmesser bedeutet geringen Widerstand und hohen Durchsatz. Kleiner Durchmesser bedeutet hohen Widerstand, größere Produktscherung/Homogenisierung/Mischwirkung an der Lochmatrize.

Querschnitt der Bohrungen/Lochmatrize: dieser kann sich gegebenenfalls über die Länge ändern. Er kann konisch sich verengend oder erweiternd oder beides sein. Spezielle rheologische Effekte sind denkbar. Eine Venturidüsenform ist möglich.

Form der Lochplatte: diese kann in der einfachsten Form, nämlich eben ausgeführt sein. Dem Verhalten der Spachtelelemente und dem gewünschten Produktfluß angepaßt kann sie aber auch mit Oberflächenprofilierung, z.B. kegel- oder kugelförmig erweiternd oder verengend sein.

Winkel der Bohrungen: zur Spachtelebene ist rechtwinklig oder geneigt, konzentrisch zur Drehachse oder gezielt unsymmetrisch, zur Drehrichtung geneigt oder entgegengesetzt zu wählen.

Anzahl der Stufen (Spachtelpumpen hintereinander): diese wird ausgewählt abhängig vom erforderlichen Extrusionsdruck, von der notwendigen bzw. nicht zu überschreitenden Verweilzeit, der mechanischen Energieeinleitung, wie sie für die Behandlung des Materials notwendig ist: es kann sich auch um eine oder mehrere in Gegenrichtung fördernde Spachtelpumpen für besondere Mischund Knetwirkungen, falls erforderlich, handeln.

Konstuktiv bedingt sind ja die mechanischen Anforderungen an die einzelnen Elemente geringer als bei den üblichen Schnecken und Zylindern. Zum anderen beeinflußt ein auftretender Verschleiß die Prozeßbedingungen nicht in dem Maße nachteilig wie bei konventionellen Extrudern, bei welchen bereits Änderungen von wenigen zehntel Millimetern erheblichen Einfluß auf den Prozeß nehmen können.

Schließlich wird erfindungsgemäß noch ein Verfahren zum Kochextrudieren von Biopolymeren für die Herstellung von Nahrungsmittelgranulaten, Snackprodukten oder Cerealien angegeben, das sich dadurch auszeichnet, daß Biopolymeres zwei Spachtelstufen zugeführt und nach Druckaufbau vor der Düse durch die Düse ausgepreßt wird, wobei der Vorgang insbesondere vertikal durchgeführt wird. Revolutionär ist bei diesem Vorschlag, daß auf die Extruderschnecke verzichtet werden kann.

Wenn in der vorliegenden Beschreibung die vertikale Bauart nicht ausdrücklich erwähnt wird, dann handelt es sich um eine horizontale Bauart mit liegendem Extruderzylinder.

Die Arme des Spachtelelementes können runden Querschnitt haben, können fest (Spatel oder Spachtel) sein oder können sich über die Lochmatrize hinweg drehen. Bei mehreren Stufen kann die erste Stufe mit sich drehenden Rollen versehen sein.

Die die Lochplatte bestreichenden Elemente können konische, sich von innen nach außen verjüngende gegebenenfalls ebensfalls sich um ihre eigene Achse drehbare Elemente sein, wobei die Lochmatrize auf ihrer Oberseite komplementär ausgebildet ist, d.h. sich von innen nach außern erweitert.

Eine andere Lösung bietet eine extrem geringe Gangtiefe der Schnecke, mit einem Verhältnis von Gangtiefe zu Schneckendurchmesser beispielsweise nur zwischen 1/20 bis 1/50.

Bei einem vertikalen mehrstufigen Kochextruder, meist ohne Schnecke, ist es möglich, unterschiedliche der zunehmenden Verdichtung angepaßte Kammervolumina in Massengutförderrichtung zu haben, wobei auch die angestellten Spachtel- oder Spatelelemente in den Abmessungen entsprechend kleiner ausgebildet werden.

Es ist auch möglich, eine Art Pelletpresse mit an einer vertikalen Welle senkrecht zu dieser sitzenden drehbaren Zylinderrollen auszubilden, wobei die Rollen über die Lochmatrize rollen oder streichen und der Lochmatrize eine Düse derart nachgeschaltet ist, daß vor den Rollen, den Anstellelementen oder dergleichen der Teig durch Druck verflüssigt wird, hinter der Rolle und abströmseitig hinter der Lochmatrize eine Verdampfung herbeiführbar ist.

Das Verfahren läßt sich so beschreiben daß der Förderdruck einer Schnecke, der Massenstrom eines zu extrudierenden Materials, die Temperatur im bzw. eines Extruders, vor allen Dingen aber der Druck vor und hinter einer Lochmatrize bzw. dem sie überstreichenden Spachtelelement so gewählt werden, daß hinter dem Spachtelelement in der Spachtelkammer eine Zone niedrigen Drucks mit Verdampfung der in der zu extrudierenden Masse enthaltenden Flüssigkeit, vor dem Spachtelelement im Staubereich der Lochplatte ein Druckaufbau und eine Verflüssigung des Flüssigkeitsdampfes, insbesondere Wasserdampfes, sich einstellt.

Es ist auch möglich, das Spachtelelement, sei es rund, sei es bevorzugt als Blech unter einem spitzen Winkel zur Lochmatrizenoberfläche angestellt, so nahe wie technisch sinnvoll an jeweils vorderen wie jeweils hinteren die jeweilige Spachtelkammer mitbildenden Lochplattenoberfläche vorbeistreichen zu lassen. In Weiterbildung kann der Abstand des Spachtelelementes zur Lochmatrize vor ihm geringer als zur Lochmatrize in Massengutströmungsrichtung hinter ihm, die es bestreicht, sein, um durch eine vergrößerte Reibung an der vorderen Lochmatrize eine höhere Förderwirksamkeit der Spachtelpumpenstufe zu erzielen.

Die Erfindung betrifft auch die Anwendung der Maßnahme nach einem der vorhergehenden Merkmale auf Doppelschneckenextruder. Ein solcher könnte erheblich kürzer bauen und damit einfacher und preiswerter aufgebaut sein: komplizierte Knet- und Homogenisierungselemente könnten entfallen. Ein solcher Doppelschneckenextruder hätte auch eine bessere Homogenisierung, eine gleichmäßigere Scher- und Wärmeverteilung, ein besseres Verschleißverhalten und bessere Steuerbarkeit zur Folge.

Schließlich betrifft die Erfindung auch ein Verfahren zum Kochextrudieren von Biopolymeren, das sich dadurch auszeichnet, daß die zur Kochextrusion notwendigen Voraussetzungen wie Druck, Temperatur, Verflüssigung und Homogenisierung schließlich durch eine oder mehrere Spachtelpumpenstufe(n) aufgebracht werden.

Beispielsweise Ausführungsformen der Erfindung sollen nun mit bezug auf die beiliegenden Zeichnungen näher erläutert werden. Diese zeigen in
- **Figur 1**: eine erste Ausführungsform der Erfindung im schematischen Längsschnitt;
- **Figur 2**: eine zweite Ausführungsform im schematischen Längsschnitt;
- **Figur 3**: einen Schnitt quer durch eine Spachtelpumpenstufe;
- **Figur 4**: eine dritte Ausführungsform im schematischen Längsschnitt;
- **Figur 5**: einen Schnitt durch eine Spachtelpumpenstufe der Figur 4;
- **Figur 6**: eine vierte Ausführungsform links (A) im Schnitt, rechts (B) im Schema;
- **Figur 7**: eine fünfte Ausführungsform links (A) im Schnitt, rechts (B) im Schema;
- **Figur 8**: ist eine Andeutung der Verhältnisse des im Extrudierzustand befindlichen Teigs;
- **Figur 9**: zeigt eine konstruktive Einzelheit;
- **Figur 10**: eine besondere Ausführungsform mit vier Armen oben im Schnitt, unten in der Draufsicht;
- **Figur 11**: läßt eine einstufige Anordnung erkennen;
- **Figur 12**: zeigt eine Ausführungsform mit anderem Abmessungsverhältnis zwischen Spachtelelement und Schnecke;
- **Figur 13**: erläutert Möglichkeiten des völlig neuen Prinzips;
- **Figur 14**: zeigt eine andere Ausführungsform ähnlich Figur 13;
- **Figur 15**: zeigt eine Modifikation der Verhältnisse im Vergleich zu den vorherigen Figuren und
- **Figur 16**: zeigt einen schematischen Schnitt durch einen Doppel schneckenextruder.

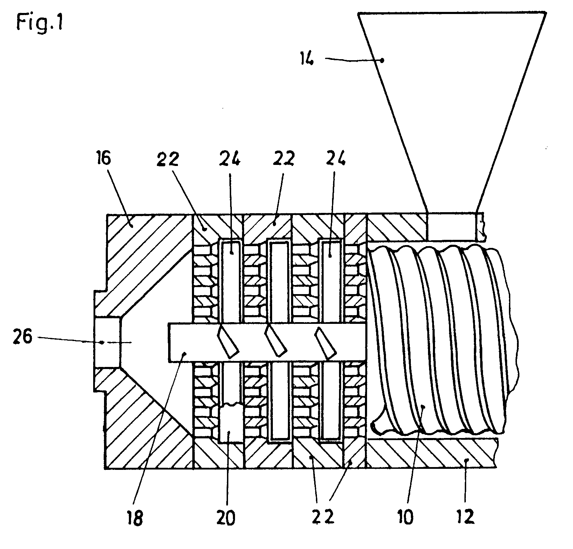

Nach Figur 1 (am meisten bevorzugteste Ausführungsform) ist der aus Beschickungstrichter 14, Extrusionszylinder 12 und Zufuhrschnecke 10 bestehende Teil eines Kochextruders an sich konventionell, wenn man davon absieht, daß der Schnecke erfindungsgemäß eine andere Funktion als beim Stand der Technik erteilt wird. In Verlängerung der Achse der Schnecke 10 befindet sich eine Welle 18, auf der Lochmatrizen 22 und Spachtelelemente 24 sitzen. Jede aus Spachtelelement 24 und Lochmatrize 22 bestehende Anordnung wird "Spachtelpumpe" oder "Spachtelstufe" genannt. Die erste Stufe kann man sich auch als durch die Zufuhrschnecke 10 und die Lochmatrize 22 gebildet vorstellen, vorausgesetzt, die Stirnseite der Schnecke ist spachtelförmig ausgebildet, d.h. ist unter einem Winkel von mehr als 0° bis 90° angestellt.

Im Beispiel handelt es sich um im wesentlichen gerade Löcher der Lochmatrize. Beim Spachtelelement 24 handelt es sich um Elemente ähnlich Propellern, die unter einem Winkel von beispielsweise 60° gegen die Lochmatrizenoberfläche angestellt sind und die Lochmatrize in technisch sinnvoll geringem Abstand überstreichen. Nach jeder Lochmatrize hat sich ein beachtlicher Druck aufgebaut. Die Düse 16 wirkt in ihren Zuführungswänden als Stauelement, bis dann schließlich das Extrudieren an der Düsenöffnung 26 erfolgt.

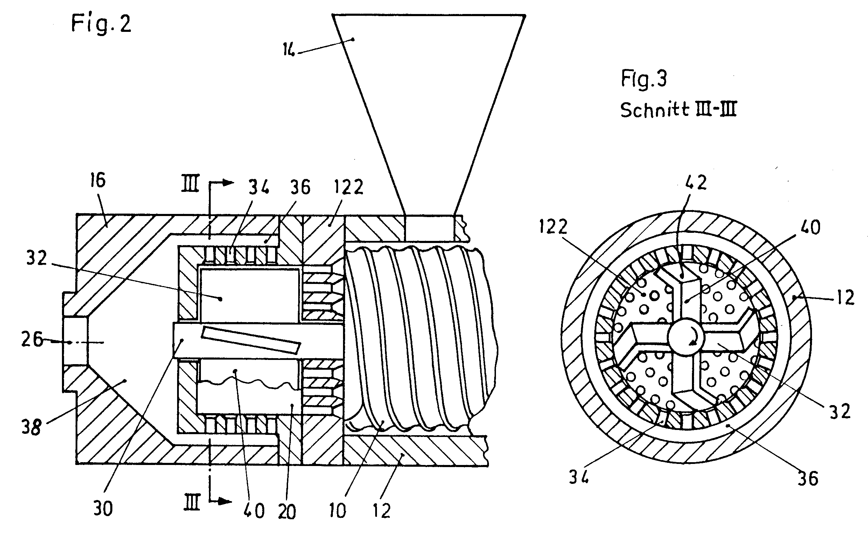

Nach einer zweiten in Figur 2/3 dargestellten Ausführungsform erhalten in der Funktion gleiche Teile gleiche Bezugszeichen. Beschickungstrichter 14, Schnecke 10 und Zylinder 12 sind ähnlich wie in Figur 1. In Verlängerung der Achse der Zuführschnecke 10 ist wieder die Welle 30 angeordnet, auf der aber nunmehr sitzen: eine Lochmatrize 122, der ein rotierfähiges Spachtelelement 32 beachtlicher Länge folgt. Dieses streicht gegen eine zylindrisch ausgebildete Lochmatrize 34 (hutförmige Ausbildung), deren Öffnungen aber nicht wie bei der Lochmatrize 122 axial, sondern radial nach außen gerichtet sind. Es baut sich also nach Austritt aus der Lochmatrize im Zwischenraum 36 (Kanal) ein beachtlicher Druck auf. Das Material geht dann (Querschnittsverminderung) infolge Stauwirkung in den hochviskosen oder flüssigen Zustand im Vorraum 38 der Düse 16 über, bevor es den Kochextruder an der Düsenöffnung 26, wo es expandiert, verläßt. Das Spachtelelement 32 ist bei Figur 3 genauer gezeigt und nach Art eines Flügelrads mit vier Armen 40 und Abkröpfungen 42 an den vier Armen versehen. Das Flügelrad überstreicht aufeinanderfolgend die Lochmatrizenöffnungen der zylindrischen Lochmatrize 34. Die Laufrichtung des Spachtelelements ist angedeutet. Die Gestalt des Spachtelelements ist nicht kritisch. Je nach dem gewünschten Druck jenseits der Lochmatrize genügt auch gegebenenfalls eine angestellte Fläche, wenn sie nur die Lochmatrize 34 überstreicht.

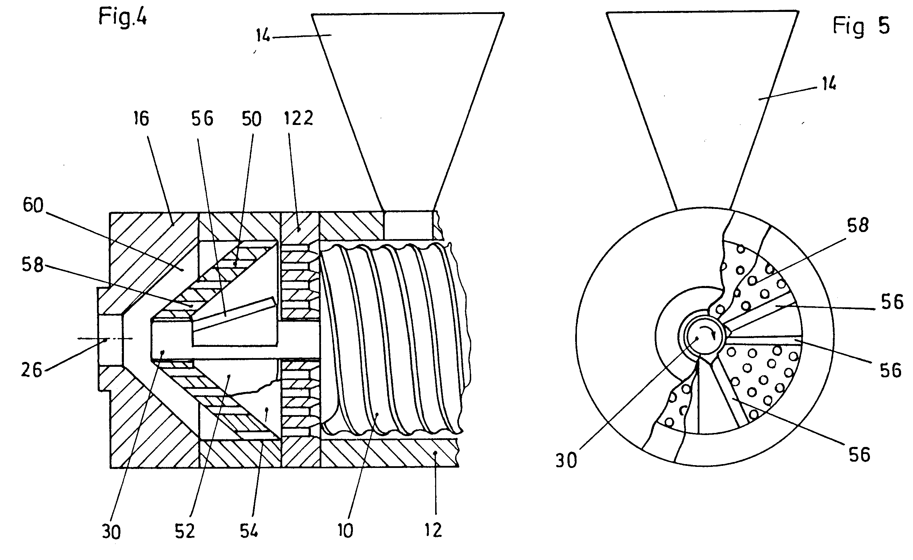

Die Figuren 4 und 5 zeigen eine dritte Ausführungsform, bei der die zweite Lochmatrize 50 in Form eines hohlen Kegelstumpfes, das Spachtelelement 52 innerhalb der Spachtelkammer 54, das zusammen mit der Lochmatrize 50 die Spachtelstufe bildet, kegelstumpfförmig ausgebildet ist. Die Flügel 56 des Spachtelelements sind gering gegen die Achse 26 (spitzer Winkel um 30° gegenüber der Mittelachse) angestellt. Im dargestellten Beispiel verlaufen die Löcher 58 der Lochmatrize 122, aber auch die der Lochmatrize 50, gerade und achsparallel. Das Durchpressen durch die Löcher 58 geht gegen einen Gegendruck im kegelstumpfförmigen Hohlraum 60, bevor das Material, gestaut durch die schrägen Wandungen der Düsenöffnung 26, zugeführt wird.

Durch die Keilwirkung des sich entgegen der Bewegungsrichtung verengenden Raumes wird in Verbindung mit der Reibung des Produktes am Lochblech bzw. an der Lochplatte ein Druck erzeugt, der das Material durch die Bohrungen bzw. das Sieb drückt.

Um die bevorzugte Lehre nach der Erfindung (ausreichende Druckdifferenz, damit vor dem Element eine Verflüssigung des Teiges, auf der Lee-Seite jeweils eine Verdampfung und Verfestigung des Teiges eintritt), herzustellen, und zwar beispielsweise in einer einstufigen Version mit nur einer Lochplatte, muß entweder der von der Schnecke zu transportierende Massenstrom so gering gehalten werden, daß auf der Niederdruckseite des Spachtelelements die Verdampfung von Wasser ermöglicht wird (geht einher mit einer erheblichen Leistungsreduktion) oder daß das Spachtelelement in seiner Abmessung so großzügig dimensioniert wird, daß sich die Druckverhältnisse wieder so einstellen, daß Wasser verdampfen kann.

Bei sämtlichen Ausführungsformen wird die Förderwirkung eines beliebig symmetrisch geformten Elements ausgenutzt, wenn es nur rotiert und eine Lochplatte überstreicht. Es stellt sich dann eine Förderwirkung ein, wenn die Reibung des Teigs an der dicht überstrichenen Lochplatte in Förderrichtung größer ist als auf der Rückseite. Selbst ein runder Rührstab hat bei Einsatz in der Maßnahme nach der Erfindung nicht nur Mischfunktion sondern auch wichtige Transport- und strömungstechnische Funktionen.

Extrem wichtig ist die oben genannte Druckdifferenz vor und hinter dem die Lochmatrize überstreichenden rotierenden Element zur Erzielung von Druckverhältnissen, derart, daß im Zuge der oszillierenden Rückströmung Wasser verdampft.

Bei Ausführungsformen mit mehreren Spachtelpumpenstufen kann man vorzugsweise so vorgehen, daß einer oder mehreren Spachtelstufen nicht die Aufgabe zugeordnet wird, Wasser zu verdampfen, sondern jene ausschließlich zum Druckaufbau oder beispielsweise in Gegenförderrichtung arbeitend zum gezielten Erzeugen von Druckdifferenzen zwischen mehreren Spachtelstufen einzusetzen.

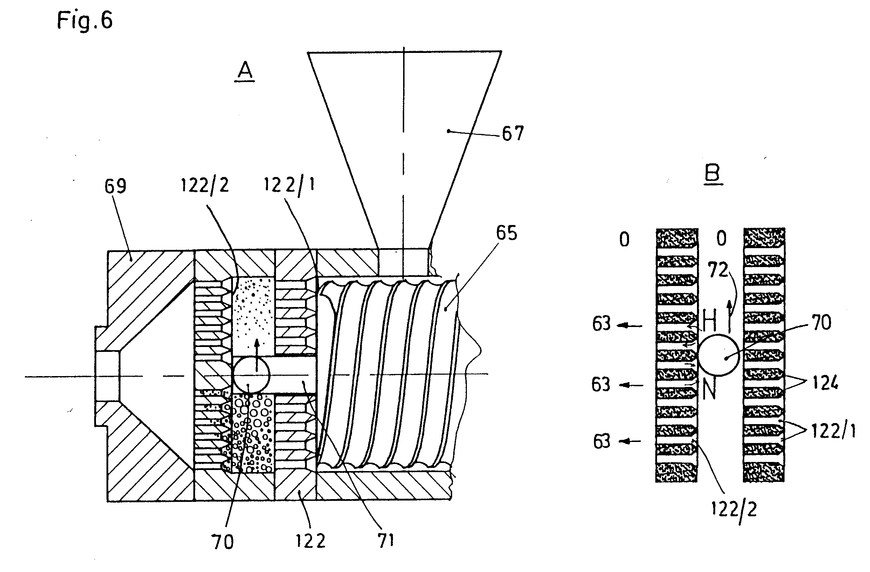

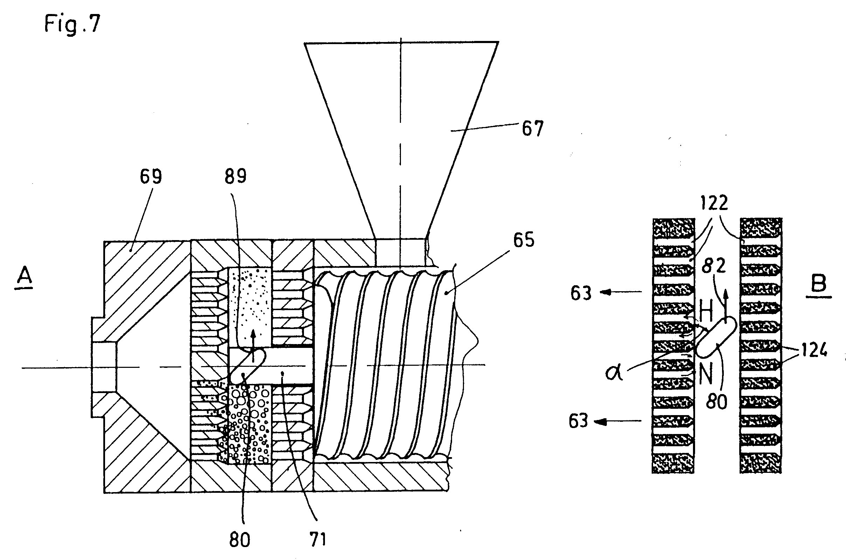

Die Figuren 6 und 7 zeigen weitere Ausbildungsbeispiele der Erfindung, wobei rechts (B) jeweils das Schema der Strömungsund Druckverhältnisse angedeutet ist. Die Kanäle in den Lochmatrizen der beiden Figuren sind mit 122 bezeichnet und anströmseitig mit Aufweitungen 124 versehen. Über die Lochmatrize streichen Rundstäbe 70, von denen etwa vier senkrecht zu einer Welle 71 vorgesehen sind, die sich nach Art eines Quirls in der Rotationsrichtung 72 bewegen. Mit H ist der Bereich hohen Drucks und hoher Temperatur, mit N der Bereich niedrigen Drucks und niederer Temperatur bezeichnet. Hoher Druck herrscht vor dem zylindrischen Element 70, welches bzw. welcher den Teig verflüssigt und ihn durch die Kanäle 122 der Lochmatrize drückt. Durch die Reibung und den Druck steigt die Temperatur bei H erheblich an. Die Hauptrichtung des Massenstroms ist mit 63 bezeichnet. Zwischen Anströmseite und Abströmseite O (Massengutförderrichtung) ist ein erheblicher Druckabfall konstruktions- und betriebsgemäß vorgesehen. Auf der Abströmseite der Lochmatrize ist der Druck also geringer und noch einmal geringer hinter dem Zylinderelement 70 (Figur 7). Dort stellt sich aufgrund niedrigen Drucks und niedriger Temperatur eine Teilverdampfung der Flüssigkeit, insbesondere von Wasser oder einem anderen Lösungsmittel, ein, somit ein Rückströmen und durch die Bewegung eine enorm günstige Homogenisierung des Teiges. Die Stirnseite der Schnecke 65 (wird von dem Beschickungstrichter 67 beschickt) ist wieder spachtelartig ausgeführt. Beim Betrieb der Vorrichtung erfährt der Teig unter anderem eine Förderung in Richtung auf die Düse 69. Konstruktiv ist dies links in der Figur ausgeführt. Es handelt sich um eine Ausführungsform mit einer einzigen Extruderschnecke 65, bei der neben dem spachtelartig ausgebildeten Kopf eine Lochmatrize 122 vorgesehen ist. Ein Raum O der vorstehend erwähnten Art ist zwischen der ersten Lochmatrize 122/1 und der zweiten Lochmatrize 122/2 belassen, wobei über die zweite Lochmatrize ein quirlartiges Element 70 mit Armen in Rundstabform läuft. Die Verdampfung ist dort durch große Bläschen, die flüssige teigige Konsistenz mit Pünktchen angedeutet. Es handelt sich also um einen zweistufigen Kochextruder, die eine Stufe gebildet durch den Spachtelkopf 65 der Schneckenpresse und die nachgeschaltete Lochmatrize 122/1, die zweite gebildet durch das quirlartige Element 70 und die zweite Lochmatrize 122/2. Die Kanäle sind anströmseitig jeweils rauh und erheblich aufgeweitet und bieten eine vergrößerte Haftreibungsfläche. Nach dieser Ausführungsform ist wie bei sämtlichen Ausführungsformen der Abstand des quirlartigen Elements bezüglich der zugehörigen nachfolgenden Lochmatrize gering, bezüglich der Abströmseite der ersten Lochmatrize 122/1 relativ größer, um eine Reibungsdifferenz herbeizuführen und die Förderwirksamkeit der Spachtelpumpenstufe zu erhöhen.

Die Welle 71 ist durch die erste Lochplatte 122/1 hindurch, durch die zweite nicht geführt. Die Wellendurchführung dient auch der Schneckenzentrierung. Obwohl das Element rund ist und senkrecht zur Lochmatrizenoberfläche steht, wird durch die Keilwirkung des sich entgegen der Bewegungsrichtung verengenden Raums in Verbindung mit der Reibungsdifferenz des Produkts an den Lochmatrizen ein Druck erzeugt, der das Material durch die Bohrungen drückt.

Der Gegendruck wird durch die Düse oder an der Düse aufrechterhalten.

Durch die Dicke der Lochplatten 122 sowie die Anzahl und Größe der Bohrungen können die Druckverhältnisse gezielt beeinflußt werden, wobei die Erweiterung der Bohrungen zum Spachtelelement hin, die Haftung bzw. die Reibung der Masse an der Lochplattenoberfläche zusätzlich beeinflußt.

Entscheidend ist die durch die Erfindung erreichte Linearisierung des Prozeßverhaltens, eine Linearisierung, die für alle Ausführungsformen gilt.

Figur 7 zeigt eine ähnliche Ausführungsform mit angestelltem länglichen Spachtelelement 80. Das Element ist unter einem Winkel α (bezogen auf die Oberfläche der zweiten Lochmatrize) angestellt. Der Winkel α ist kleiner 90°. Die Hochdruck-(H)-Bereiche und die Niederdruck-(N)-Bereiche sind wieder wie angedeutet. Die Drehrichtung des quirlartigen Elements erfolgt gemäß Pfeil 82.

Die konstruktive Figur (links) ist ansonsten ähnlich wie bei Figur 6 ausgebildet. Angedeutet ist wieder der Kompressionszustand (Pünktchen), d.h. hoher Druck, hohe Temperatur, beispielsweise flüssiger Teig, durch Bläschen ist der Niederdruckbereich angedeutet, wo die Flüssigkeit verdampft und diese aus dem Raum hinter der zweiten Lochmatrize (Raum der zur Düsenplatte führt) zurück in den Lochmatrizenzwischenraum geströmt ist und dabei eine ausgezeichnete Homogenisierung des Teigs zur Folge hatte.

Gleiche Bezugszeichen bedeuten gleiche Verhältnisse. Es handelt sich um eine ähnliche zweistufige Ausführungsform.

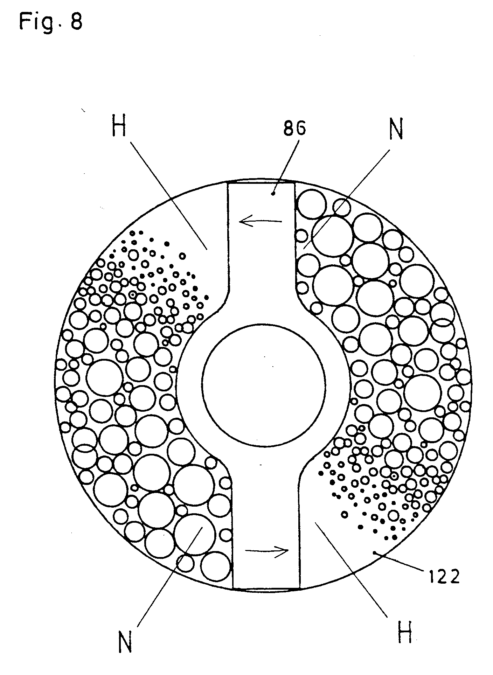

Figur 8 zeigt ein Detail hierzu, ein Detail dessen, was auf der Lochmatrize 122 in den Hochdruck- und Niederdruckbereichen (H und N) passiert. Über die Lochmatrize 122 dreht ein Rundstabelement 86, das nur zwei Arme im Ausführungsbeispiel hat. Das Element kann auch ein beliebig anders gestaltetes Element, das nur der Einfachheit halber mit zwei Armen ausgebildet ist, sein. Im Hochdruckbereich H vor dem Spachtelelement (Rotationsrichtung durch Pfeile angedeutet) wird der Teig verdichtet, das Wasser kondensiert, die Temperatur steigt. Im Niederdruckbereich N verdampft das Wasser, der Teig expandiert und nimmt dabei eine Temperatur an, die dem Absolutdruck dort entspricht. Sowohl durch die niedrige Temperatur als auch durch die expandierte Form besitzt der Teig eine höhere Viskosität. Hierdurch wird dem durch die Lochmatrize in den Niederdruckbereich zurückströmenden Material ein Widerstand entgegengebracht, welcher bewirkt, daß mehr Material im Hochdruckbereich durch die Lochmatrize strömt als im Niederdruckbereich zufließt. Es sind bei dieser Figur die Verhältnisse im Teig, nicht etwa die Löcher der Lochmatrize, dargestellt.

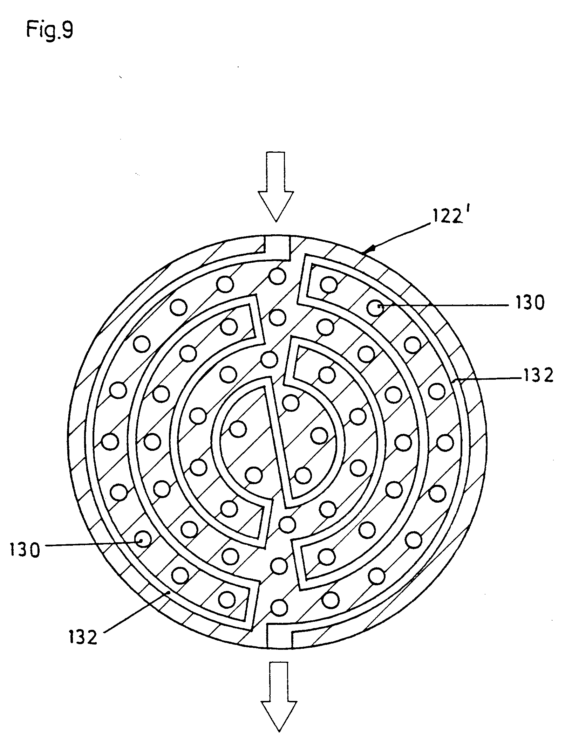

Figur 9 zeigt eine Loch- bzw. Staubplatte 122' im Schnitt mit gleichmäßig verteilten Löchern 130 und eingearbeiteten Temperierkanälen 132. Die Strömungsrichtung des Fluids ist durch die Pfeile (Eintritt-Austritt) angedeutet. In den hier dargestellten Ausführungsformen können alle Lochmatrizen, andererseits auch nur einige der Lochmatrizen, mit solchen Temperierkanälen 132 ausgestattet sein.

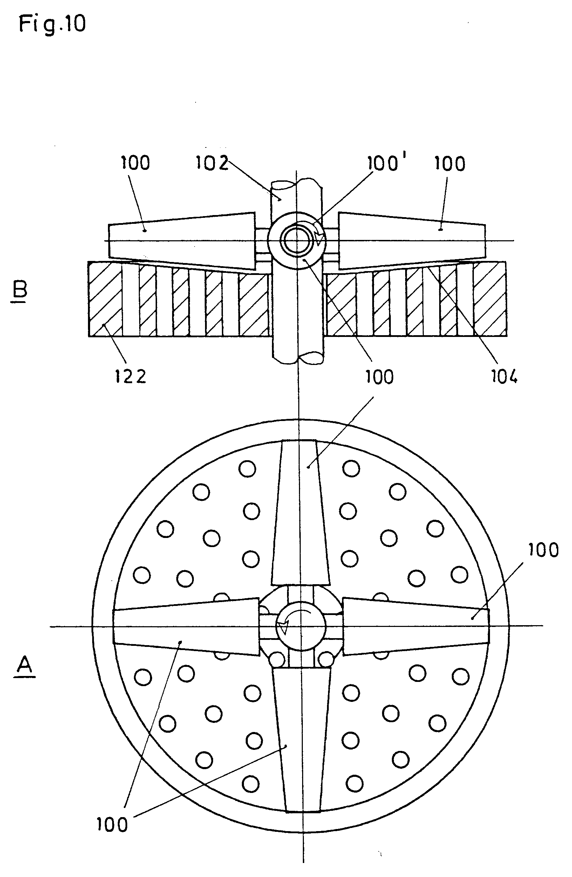

Figur 10 zeigt eine weitere Modifikation, in Figur 10A in der Draufsicht, in Figur 10B im Schnitt durch eine Lochplatte 122. Die Aufweitungen in den Löchern (anströmseitig) können vorgesehen sein, sind aber nicht dargestellt. Das Besondere bei dieser Ausführungsform ist, daß die senkrecht zur Achse 102 sitzenden Rollen 100 konisch von innen nach außen mit abnehmendem Querschnitt ausgebildet sind. Das zugehörige Lochplattenprofil ist komplementär konisch ausgebildet (vergrößert sich, wie bei 104 gezeigt, in seiner Dicke von innen nach außen), so daß die konischen Rollen einwandfrei auf dem konischen Profil 104 ablaufen können.

Die an den "Quirlarmen" sitzenden, im vorliegenden Fall konischen, in anderen Ausführungsformen beispielsweise zylindrischen Rollen, können auch als sich drehende Rollen (Pfeil 100') ausgeführt werden. Die Rollen 100 drehen sich dabei um ihre eigene Achse. Andererseits dreht der "Quirl" sich in der in Figur 10A anbedeuteten Richtung. Die Drehbewegungen in den Richtungen senkrecht zueinander überlagern sich.

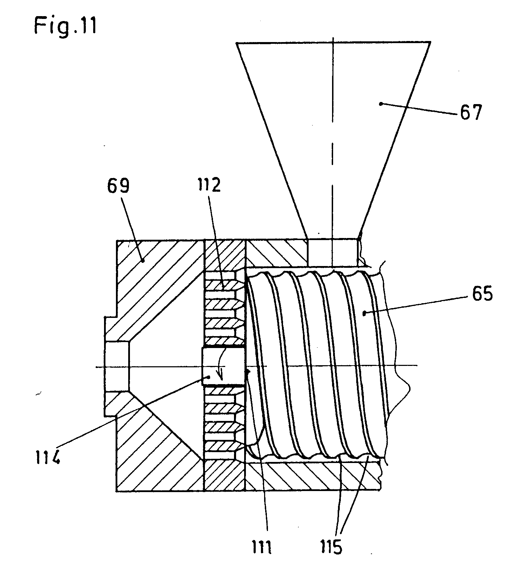

Figur 11 zeigt eine einstufige horizontale Ausführungsform mit spachtelförmig gestalteter Schneckenspitze 111. Die zugeordnete Lochplatte 112 trägt eine Wellendurchführung 114 zur Schneckenzentrierung. Wichtig ist die Schneckengeometrie: gemäß der Darstellung verfügt die Schnecke über eine extrem geringe Gangtiefe (bei 115) verglichen mit bekannten durchsatzoptimierten Ausführungsformen. Diese für die Förderung an sich ungünstige Gangtie fe schafft aber am Spachtelelement einen ausreichend geringen Druck auf der Niederdruckseite, der eine Verdampfung von Wasser garantiert. Beispielsweise kann das Verhältnis von Gangtiefe zu Durchmesser zwischen 1/20 bis 1/50 betragen.

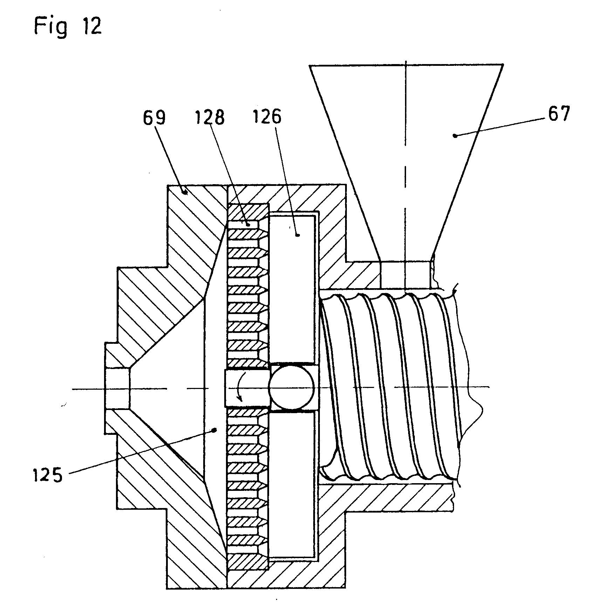

Figur 12 zeigt eine Ausführungsform mit einem Spachtelelement 126 und einer Lochmatrize 128, deren Durchmesser groß gegenüber dem Durchmesser der Schnecke sind. Beispielsweise kann das Verhältnis von Durchmesser Spachtelelement/Lochmatrize zu Durchmesser Schnecke bei 2,0 bis 3,0 : 1 liegen. Wesentlich erhöhte Förderleistung kann erzielt werden, da hier tiefer geschnittene Schnecken (obwohl eine schwache Gangtiefe dargestellt ist) möglich sind. Durch diese Ausbildung wird im Bereich anströmseitig vor der Lochmatrize 128 und in Bewegungsrichtung des Spachtelelements 126 hinter dem Spachtelelement sowie abströmseitig, bezogen auf die Matrize 128, in der der Düse 69 zugewandten Kammer 125 ein ausreichend niedriger Druck gehalten, der die Verdampfung von Wasser ermöglicht.

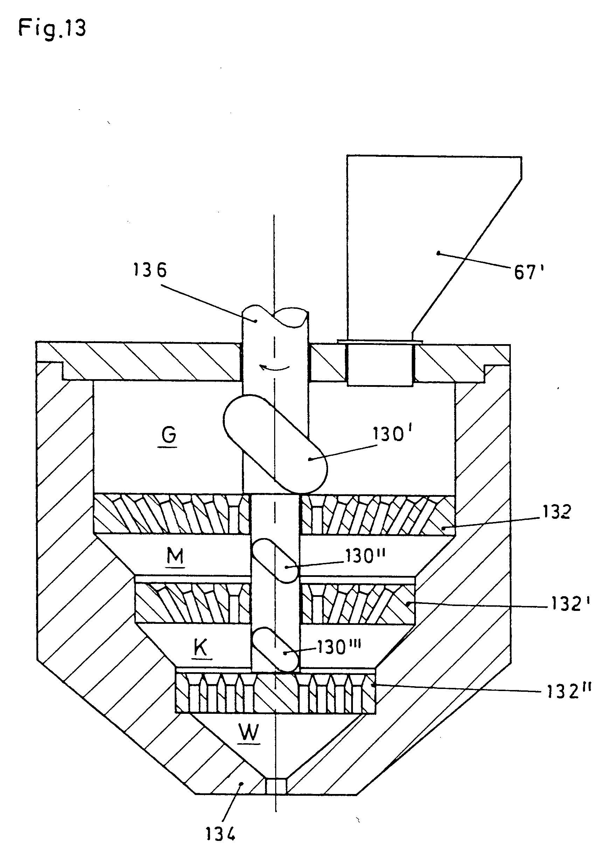

Eine völlig andere Bauart, zudem noch vertikal, zeigt Figur 13. Eine Schnecke ist hier bei diesem dreistufigen Kochextruder vertikaler Bauart nicht vorgesehen. Die Kammervolumina G, M, K, W nehmen ab in Richtung der Verdichtung von pulverförmig zu flüssig (Massenstromförderrichtung). Drei Stufen mit abnehmendem Kammervolumen sind vorgesehen. Entsprechend kleiner sind auch die Spachtelelemente 130'; 130''; 130''' gestaltet. Es handelt sich um Spachtelelemente, die ähnlich wie in Figur 7 angestellt sind.

Entsprechend kleiner werden die Lochplatten 132; 132'; 132''. Der Zylinderinnenraum verjüngt sich entsprechend stufenartig bis zur Düse 134.

Entsprechend der Darstellung sind die Bohrungen schräg eingebracht, so daß der Massenstrom glatt hin zu der kleinsten vor der Düse gelegenen Kammer W durch die mit Aufweitungen versehenen Löcher der Lochmatrizen 132 geht. Die Welle 136 dreht sich wieder um ihre vertikale Achse.

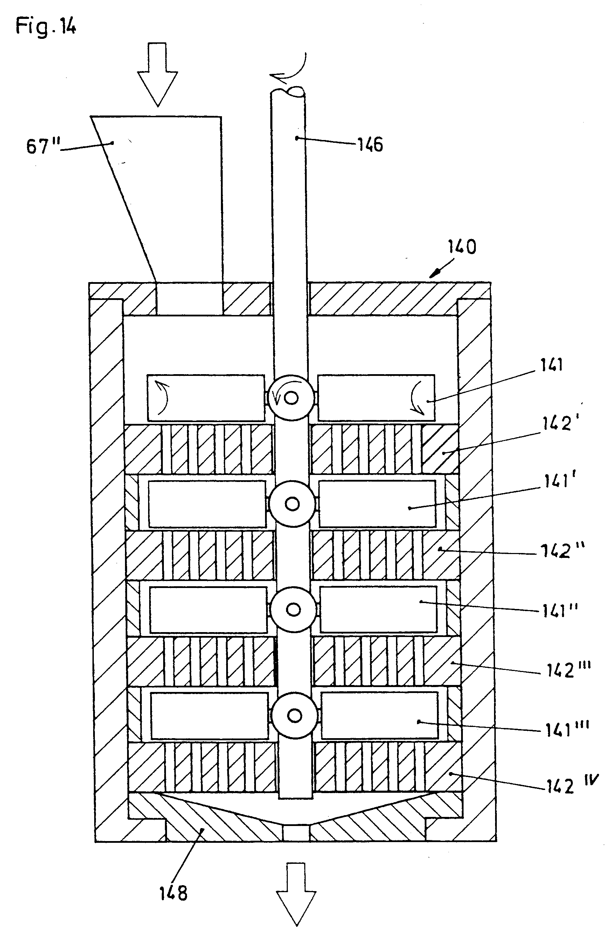

Figur 14 zeigt einen vierstufigen ebenfalls vertikalen Kochextruder 140, dessen Besonderheit u.a. darin besteht, daß in der ersten Stufe die zylindrischen Rollen zusätzlich drehbar sind. Die Drehrichtung der Welle 146 für Spachtelelemente ist genauso angegeben, wie die Drehrichtung der zylindrischen Rollen in eben dieser ersten Stufe. Die ersten Rollen 141 laufen nach Art eines Kalanders über die erste Lochmatrize 142', die übrigen Rollen 141'; 141''; 141''' streichen über die zugehörigen Lochmatrizen 142''; 142'''; 142'''', bevor die Düse 148 erreicht ist. Durch die weißen Pfeile ist die Massenstromförderrichtung angedeutet.

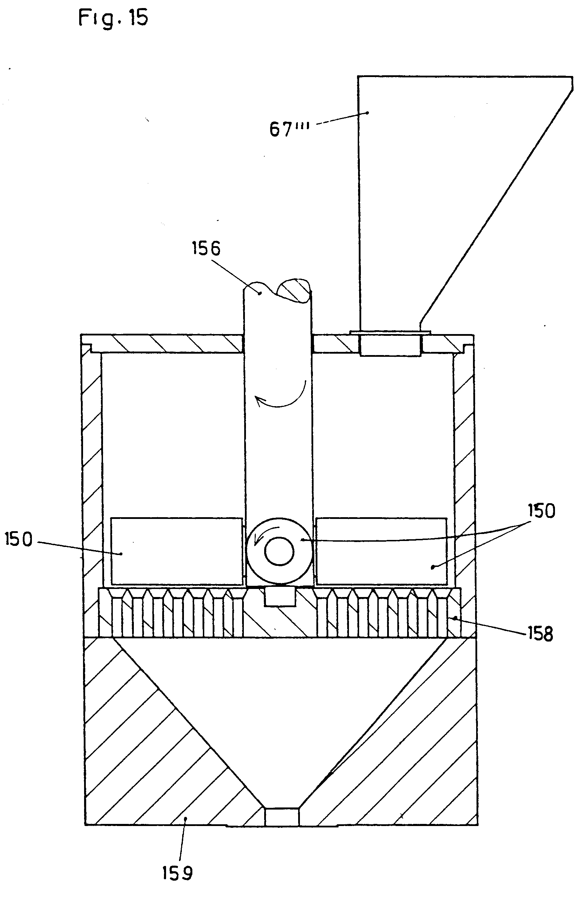

Figur 15 schließlich zeigt eine einstufige vertikale Ausführungsform ähnlich einer Pelletpresse mit drehbaren Zylinderrollen 150, einer Aufgabe 67''', einer vertikalen Welle 156, an der z.B. senkrecht die Rollen 150 sitzen. Die Rollen 150 rollen über die Lochmatrize 158. Die Ausführung ist zwar ähnlich wie eine Pelletpresse, jedoch ist die Konstruktion gemäß der Erfindung auslaufseitig mit Düsen versehen. Es wird vor allen Dingen ein Druck aufgebaut. Wie bei allen beschriebenen Ausführungsformen ist es so, daß vor den Rollen, Anstellelementen oder dergleichen, der Teig verflüssigt, hinter der Rolle eine Verdampfung und Teilrückströmung stattfindet.

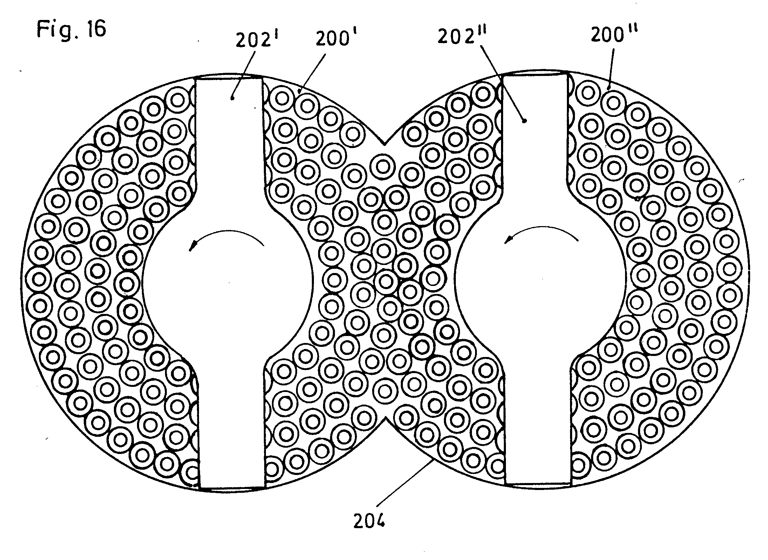

Figur 16 zeigt einen Doppelschneckenextruder. Über jede der Lochmatrizen 200'; 200'' streicht je ein Spachtelelement 202'; 202''. Die Lagerung erfolgt in einem gemeinsamen Gehäuse 204. Der Vorteil bei dieser Konstruktion ist die kürzere Bauweise. Er würde damit einfacher und preiswerter aufgebaut sein. Komplizierte Knet- und Homogenisierungselemente könnten entfallen. Wie bei der Einschneckenmaschine ist die Homogenisierung verbessert, die Scher- und Wärmeverteilung vergleichmäßigt; es stellt sich ein besseres Verschleißverhalten ein; die Steuerbarkeit ist erhöht.

Allgemein können also erfindungsgemäß Suspensionen, Knetmassen, Pasten und Teige durch Lochmatrizen mittels eines über die Lochmatrize gleitenden Streicharmes gefördert werden.

Die Förderung erfolgt aufgrund des erhöhten Druckes auf der Frontseite (Bewegungsrichtung) des Streicharmes. Die Höhe des Druckes ist von der Form des Streicharmes (Stab, angestellte Spachtel etc.) und dem Abstand des Streicharmes von der Lochmatrize abhängig. Die Konstruktion muß so gewählt werden, daß der Druck vor dem Streicharm ausreicht, den Druckverlust über die Matrizenlöcher zu überwinden.

Der Vorteil des Streicharmes gegenüber reinem Druckaufbau mittels Schnecke liegt
1. in der lokalen Druckerhöhung über wenige Löcher.
2. Besondere Bedeutung gewinnt diese "Spachtelpumpe" (auch Spatelpumpe), wenn (wie bei vielen Pasten) ein vom Schergefälle abhängiges Fließverhalten (strukturviskoses Verhalten) zu erwarten ist.
   Die intensive Misch- und Scherbewegung vor dem Spachtel verringert die Zähigkeit der Paste und benötigt damit einen nur geringen Druckverlust beim Durchsatz durch die Löcher.
   Die "Verflüssigung" der Paste kann eine materialinterne Eigenschaft sein (intrinsic Strukturviskosität). Im Falle wasserhaltiger Suspensionen und Teige sind diese Phänomene auch dann zu erwarten, wenn sich der Zustandspunkt (Druck/Temperatur) in der Nähe des Siedepunktes befindet.
   a) Liegt der Zustandspunkt am Siedepunkt, dann liegt das Wasser z.T. dampfförmig vor - der Teig bildet einen Schaum mit relativ hohen Viskositäten - . Beim Verdichten vor dem Streicharm kondensiert das Wasser, der Teig verflüssigt sich und läßt sich mit hohem Durchsatz durch die Löcher drücken. Nach dem Durchgang verfestigt sich der Teig. Ein Rückströmen auf der Lee-Seite des Streicharmes wird damit gegebenenfalls verhindert. Damit kann auch gegen einen relativ hohen Gegendruck gefördert werden.
   b) Liegt der Zustandspunkt leicht unter dem Siedepunkt, dann ist das Wasser flüssig (kein Schaum).

   Durch die Bearbeitung auf der Stauseite wird Energie zugeführt (elastische Druckenergie und dissipierte Scherenergie). Die dissipierte Scherenergie führt zu einer lokalen Temperaturerhöhung. Auf der Lee-Seite entsteht ein Unterdruck, der zum Verdampfen eines Teils der Flüssigkeit führt und damit zur Schaumbildung im Teig. Mit der Abkühlung oder durch Druckerhöhung kondensiert der Wasserdampf (Kavitation).
3. Unter den genannten Bedingungen hat die Vorrichtung die Funktion einer Pumpe und kann deshalb durch mehrstufige Anordnung einen erhöhten Druck aufbauen.
   Bei mehrstufigen Anordnungen muß bezüglich der Pumpwirkung eine "Asymmetrie" gewährleistet sein. D.h. die Pumpe muß eine "Förderrichtung" aufweisen. Diese Förderrichtung kann einmal durch den Anstellwinkel in Förderrichtung oder durch unterschiedliche Abstände des Streicharmes zur unteren und oberen Lochplatte oder durch unterschiedliche Oberflächeneigenschaften (Reibung) gewährleistet sein.
   Bei völliger geometrischer Symmetrie und gleichen Reibungsverhältnissen muß der Spachtelpumpe ein äußerer Druck überlagert sein. Die "Spachtelpumpe" dient in diesem Fall nur als "Verflüssiger".

Die durch die Maßnahme nach der Erfindung gelösten Aufgaben bzw. die Vorteile lassen sich wie folgt zusammenfassen:
eine um bis 100 % höhere Leistung
eine bessere Produktqualität durch gleichmäßigere Strömung und gleichmäßigere Textur
hervorragende Prozeßsteuerungsmöglichkeiten
sehr einfache Handhabung der Teile
preiswerte Werkzeuge
erhebliche Reduktion der Verschleißteilkosten
Unempfindlichkeit gegen Rohstoffschwankungen
erheblich größere Freiheit in der Rezeptur-Gestaltung
besseres Einzugsverhalten mehlförmiger Rohstoffe.

Durch die Maßnahme nach der Erfindung können auch bestehende "verschlissene" Schneckenextruder wieder aufgerüstet werden und deren Lebensdauer dadurch erheblich verlängert werden.

### Beispiel

Eine Viergang-Schnecke bekannter Bauart mit üblichem Schneckenprofil wurde an der Stirnfläche um einen Adapter erweitert, welcher durch die erste Stauplatte, die sich wie üblich vor der spachtelförmigen Schneckenstirnfläche befindet, hindurchgeführt wird und das Spachtelelement aufnimmt. Dieses überstreicht eine zweite Stauplatte und bildet damit die zweite Spachtelstufe. Die üblichen Düsenplatten schließen das System ab. Die beiden Stauplatten bilden eine Spachtelkammer, in welcher das Spachtelelement rotiert. Das Spachtelelement von beispielsweise kreisförmigem Querschnitt ist nur geringfügig dünner als der durch die zwei Stauplatten gebildete Spachtelraum. Durch die Dicke der Lochplatten, die Anzahl und die Größe der Bohrungen können auch die Druckverhältnisse gezielt beeinflußt werden. Die Art der konischen Erweiterung der Bohrungen zum Spachtelelement hin beeinflußt die Haftung/Reibung der Masse an der Lochplattenoberfläche und somit deren Fördercharakteristik.

Verwirklicht man hier die Maßnahme nach der Erfindung, dann kann man sogar mit verbrauchten Schnecken hervorragende Ergebnisse erzielen, wobei beispielsweise der Spalt zwischen Schnecke und Stator rundum 1,6 mm ausmacht. Setzt man das Spachtelelement in Bewegung, so wird sich in Drehrichtung vor dem Spachtelelement eine Zone hohen Drucks, in Drehrichtung hinter dem Spachtelelement eine Zone niedrigen Drucks aufbauen. Hat nun der Teig eine Temperatur von 140°C in einer Zone niedrigen Drucks und liegt der Druck dort unter 3,5 bar, so verdampft das Wasser, der Teig vergrößert sein Volumen. In diesem Zustand (eine Mischung von Dampfblasen und Flüssigkeit) hat der Teig eine erheblich höhere Viskosität als in rein flüssiger Form, setzt also dem herannahenden Spachtel einen hohen Widerstand entgegen, wodurch Druck aufgebaut wird, das Wasser kondensiert, wobei die Kondensationswärme den Teig erneut aufheizt etc. Der durch das Spachtelelement hervorgerufene ständige Wechsel von sehr hohen Drücken und niedrigen Drücken unterhalb des Siedepunktes des Wassers bzw. der Flüssigkeit bewirkt enorme Homogenisierungseffekte im Teig, bewerkstelligt einen extrem effektiven Energieaustausch und verhindert so partiale Überhitzungen und bildet vermutlich die wesentliche Basis für das überraschend gute Pumpverhalten der Spachtelstufe. Durch die ständig abfolgende Expansion und Kompression wird der Wärmetransport innerhalb des Systems erheblich verbessert und schließlich werden die Fließeigenschaften des Biopolymerteigs positiv beeinflußt.

## Patentansprüche

1. Kochextruder mit Beschickungstrichter, wenigstens einer Schnecke oder Doppelschnecke sowie Düse zur Herstellung von thermisch behandelten Biopolymeren, gekennzeichnet durch wenigstens eine Spachtelpumpe (22/124; 32/34; 50/52; 80/122; 100; 122; 126/128 ...) zwischen Schnecke bzw. Schnecken (10; 65... ) und Düse (16; 69 ...), die je aus einer Lochmatrize (22; 122; 34; 50; 122/1; 122/1; 122/2; 122; 124 ...) und wenigstens einem zugeordneten Spachtelelement (24; 32; 52; 70; 65; ...), definiert als "Spachtelpumpe", bestehen, wobei das Spachtelelement unter einem spitzen Winkel zwischen 0 und 90 Grad zur Lochmatrize, in Bewegungsrichtung des Spachtelelements gesehen, so dreht, daß das behandelte Material einem Pumpeffekt ausgesetzt wird.

2. Kochextruder nach Anspruch 1, gekennzeichnet durch wenigstens zwei sogenannte Spachtelpumpen (22/24; 22/24 ... 65/122/1-70-122/2; 65/122; 80/122) zwischen Schnecke bzw. Schnecken (10 ...) und Düse (16 ...).

3. Kochextruder nach Anspruch 1, dadurch gekennzeichnet, daß die Stirnfläche des düsenseitigen Endes der Schnecke bzw. Schnecken (10) spachtelförmig ausgebildet und von einer Ausbildung derart ist, daßsie eine Lochplatte (120 ...) bestreicht.

4. Kochextruder nach einem der vorhergehenden Ansprüche, dadurch gekennzeichnet, daß die je aus einer Lochplatte (22 ...) und Spachtelelement (24 ...) bestehenden Spachtelpumpen auf einer Welle (18) mit und in Verlängerung der Schnecke bzw. Schnecken (10; 13) montiert sind.

5. Kochextruder nach einem der vorhergehenden Ansprüche, dadurch gekennzeichnet, daß die Spachtelpumpen voneinander unabhängige Antriebe haben.

6. Kochextruder nach einem der vorhergehenden Ansprüche, dadurch gekennzeichnet, daß die aufgrund der zahlreichen Bohrungen (130) mit guter Wärmeübertragung ausgestatteten Lochmatrizen (122') über Kanäle (132) für Dampf/Kühlwasser oder Wärmeträgeröl verfügen (Fig. 9).

7. Kochextruder zur Herstellung von thermisch behandelten Biopolymeren nach einem der vorhergehenden Ansprüche, dadurch gekennzeichnet, daß die Extruderschnecke bzw. Schnecken als einfache Zufuhrschnecke bzw. Schnecken mit Vorverdichtung betrieben ist und ihr mindestens eine Spachtelpumpe zwischen Schnecke bzw. Schnecken und Düse folgt, die aus einer Lochmatrize und einem zugeordneten Spachtelelement (Definition Spachtelpumpe) besteht bzw. bestehen.

8. Kochextruder nach Anspruch 1, dadurch gekennzeichnet, daß der Kochextruder nur aus einer Aneinanderreihung von Spachtelpumpen besteht, wobei die Aneinanderreihung von Spachtelpumpen vertikal angeordnet ist und die Schnecke bzw. Schnecken ausschließlich als Zufuhrschnecke dient.

9. Kochextruder nach einem der vorhergehenden Ansprüche, dadurch gekennzeichnet, daß die Spachtelfläche gerade, gekrümmt oder profiliert über die Lochmatrize rotierend ausgebildet ist.

10. Kochextruder nach Anspruch 9, dadurch gekennzeichnet, daß die die Lochplatte(n) überstreichenden Spachtelelemente bzw. Quirlarme, die beispielsweise senkrecht zur Antriebsachse der quirlartigen Ausbildung der Spachtelpumpe angeordnet sind, runden Querschnitt haben und wie eine zylindrische oder kegelförmige nach außen sich verjüngende Rolle ausgebildet sind.

11. Kochextruder nach einem der vorhergehenden Ansprüche, dadurch gekennzeichnet, daß die Oberfläche der Spachtelfläche möglichst glatt, d.h. von geringer Reibung, die Oberfläche der Lochmatrize möglichst rauh, d.h. von großer Reibung ist.

12. Kochextruder nach einem der vorhergehenden Ansprüche, dadurch gekennzeichnet, daß diese Extruderwerkzeuge, insbesondere Extrusionszylinder, gegebenenfalls Schnecke bzw. Schnecken, Düse etc. aus Stahl, Gußeisen oder einem anderen nahrungsmittelmäßig unbedenklichen Material bestehen.

13. Kochextruder nach einem der vorhergehenden Ansprüche, dadurch gekennzeichnet, daß die Spachtelstufen jeweils als Modul ausgebildet sind.

14. Kochextruder nach einem der vorhergehenden Ansprüche, dadurch gekennzeichnet, daß die einzelnen Spachtelstufen im Baukastensystem kombinierbar ausgebildet sind.

15. Kochextruder nach einem der vorhergehenden Ansprüche, dadurch gekennzeichnet, daß die Lochmatrizen anströmseitig als Kugelkalotte, und das oder die zugeordnete(n) Spachtelelement(e) komplementär der Kugelkalotte unmittelbar gegenüberstehend und ihrer Kontur folgend ausgebildet sind.

16. Kochextruder nach einem der vorhergehenden Ansprüche, dadurch gekennzeichnet, daß auf einer die Schnecke bzw. Schnecken mit als Spachtelkopf ausgebildeten Schneckenende verlängernden Achse eine ebene Lochmatrize mit insbesondere achsparallelen Löchern mit anströmseitiger Aufweitung angeordnet ist.

17. Kochextruder nach Anspruch 16, dadurch gekennzeichnet, daß dieser Lochmatrize folgend drei weitere Spachtelstufen, je bestehend aus einer Lochmatrize (22) und einem Spachtelelement, (24) angeordnet sind, wobei das Spachtelelement als rotierendes Flügelrad (32; 56) ausgebildet ist.

18. Kochextruder nach Anspruch 17, dadurch gekennzeichnet, daß dieser Lochmatrize folgend eine hutförmige innen hohle ringförmige Lochmatrize (34) angeordnet ist, die eine hohle Spachtelkammer (20) bildet, innerhalb deren ein rotierendes, die Ringmatrize bestreichendes Spachtelement (40) angeordnet ist.

19. Kochextruder nach Anspruch 16, dadurch gekennzeichnet, daß auf dieser Welle anschließend eine konische Lochmatrize (50) mit insbesondere achsparallelen Öffnungen (58), gegebenenfalls mit anströmseitigen Aufweitungen versehen, angeordnet ist, wobei in der durch die hohle konische Lochmatrize gebildeten Spachtelkammer (54) ein kegelstumpfförmiges die Spachtelkammer (54) ausfüllendes Spachtelement (52) angeordnet ist, das die Öffnungen (68) der Lochmatrize (50) innen überstreicht.

20. Kochextruder nach einem der vorhergehenden Ansprüche, dadurch gekennzeichnet, daß das Durchmesserverhältnis von Schneckenaußendurchmesser zu Spachtelelementkopf und/oder Lochmatrize zwischen 1 : 2,0 - 3.0 beträgt.

21. Kochextruder nach einem der vorhergehenden Ansprüche, dadurch gekennzeichnet, daß die die Lochplatte bestreichenden Elemente (100) konische, sich von innen nach außen verjüngende, gegebenenfalls um ihre eigene Achse drehbare Elemente sind, wobei die Lochmatrize auf ihrer Oberseite komplementär ausgebildet ist, d.h., daß sie sich (104) von innen nach außen erweitert.

22. Kochextruder nach einem der vorhergehenden Ansprüche, gekennzeichnet durch eine mittige Wellendurchführung durch die Lochmatrize zur Schneckenzentrierung (114 ...), wobei die Schnecke bzw. Schnecken über eine extrem geringe Gangtiefe, insbesondere über ein Verhältnis von Gangtiefe zu Schneckendurchmesser zwischen 1/20 und 1/50 verfügt.

23. Kochextruder mit Beschickungstrichter sowie Düse, zur Herstellung von thermisch behandelten Biopolymeren, dadurch gekennzeichnet, daß der Kochextruder vertikal und mehrstufig mit Spachtelpumpen ausgebildet ist, wobei jede Spachtelpumpe aus einer Lochmatrize und einem zugeordneten Spachtelelement besteht, der Anstellwinkel des Spachtelelements bzw. der Spachtelfläche gegenüber der Lochmatrize - in Bewegungsrichtung der Spachtelarme gesehen - ein spitzer Winkel ist, und der Kochextruder unterschiedliche der zunehmenden Verdichtung angepaßte Kammervolumina (G; M; K; W) in Massengutförderrichtung aufweist, und daß auch die angestellten Spachtelelemente (130'; 130''; 130''') in den Abmessungen entsprechend kleiner ausgebildet sind.

24. Kochextruder gemäß Anspruch 23, dadurch gekennzeichnet, daß einige der Spachtelelemente zylindrische Rollen (141) sind, die insbesondere in der ersten Stufe rotierbar ausgebildet sind.

25. Kochextruder mit Beschickungstrichter (67''') und Düse (159) einstufiger Anordnung, dadurch gekennzeichnet, daß er in Bauart einer Pelletpresse mit an einer vertikalen Welle (156) senkrecht zu dieser sitzenden drehbaren Zylinderrollen (150) ausgebildet ist, wobei die Rollen über eine Lochmatrize (158) rollen oder streichen und der Lochmatrize eine Düse nachgeschaltet ist, derart, daß anströmseitig vor den Rollen, den Anstellelementen oder dergleichen der Teig verflüssigt, hinter der Rolle und abströmseitig hinter der Lochmatrize (158) eine Verdampfung und Teilrückströmung herbeiführbar ist.

26. Verfahren zum Kochextrudieren von Biopolymeren, dadurch gekennzeichnet, daß in einem Kochextruder gemäß Anspruch 1 der Förderdruck einer Schnecke, der Massenstrom eines zu extrudierenden Materials, die Temperatur im bzw. eines Extruders, vor allen Dingen aber der Druck vor und hinter einer Lochmatrize bzw. dem sie überstreichenden Spachtelelement so gewählt werden, daß hinter dem Spachtelelement in der Spachtelkammer eine Zone niedrigen Drucks mit Verdampfung der in der zu extrudierenden Masse enthaltenden Flüssigkeit, vor dem Spachetelelement im Staubereich der Lochplatte ein Druckaufbau und eine Verflüssigung des Flüssigkeitsdampfes, insbesondere Wasserdampfes, sich einstellt.

27. Verfahren nach Anspruch 26, dadurch gekennzeichnet, daß nach Passieren jeder Lochmatrize einer Spachtelpumpestufe dem Material ein Druck entgegengesetzt wird, der das Material zu einer flüssigen Masse verdichtet.

28. Verfahren nach Anspruch 27, dadurch gekennzeichnet, daß der Extruder auf einen Unterschied im Druck zwischen dem Bereich vor dem Spachtelelement bzw. vor der Schneckenkopfkeilfläche und dem Druck im Bereich hinter dem Spachtelelement auf 10 : 1 gefahren wird, wobei der untere Bereich unterhalb Siedebedingungen liegt.

29. Verfahren nach einem der Ansprüche 24 bis 28, dadurch gekennzeichnet, daß über die Spachtelpumpenstufe unter Berücksichtigung der Extruderparameter sowie unter Berücksichtigung des zu extrudierenden Materials eine möglichst große Druckdifferenz hervorgerufen wird.

30. Verfahren nach einem der Ansprüche 28 oder 29, dadurch gekennzeichnet, daß im Bereich der Lochmatrize das verflüssigte Material in oszillierende Bewegung versetzt wird.

31. Verfahren nach einem der Ansprüche 26 bis 30, dadurch gekennzeichnet, daß mit einem Prozeßvolumen von etwa 200 cm³ pro Spachtelpumpenstufe bei einem Massenstrom von 200 bis 350 kg/h und einer hieraus folgenden Verweilzeit von 2 bis 4 Sekunden gearbeitet wird.

32. Verfahren zum Kochextrudieren von Biopolymeren zur Herstellung von Nahrungsmittelgranulaten, Snackprodukten oder Cerealien, dadurch gekennzeichnet, daß Biopolymer zwei Spachtelstufen zugeführt und nach Druckaufbau vor der Düse durch die Düse ausgepreßt wird, wobei jede Spachtelstufe aus einer Lochmatrize und einem zugeordneten Spachtelelement besteht, der Anstellwinkel des Spachtelelementes bzw. der Spachtelfläche gegenüber der Lochmatrize - in Bewegungsrichtung der Spachtelarme gesehen - ein spitzer Winkel ist und der Extrusionsvorgang vertikal vorgenommen wird.

33. Verfahren nach einem der Ansprüche 26 bis 32, wobei mit einem Spachtelelement gearbeitet wird, das im Durchmesser so groß gegenüber dem Außendurchmesser der Extruderschnecke dimensioniert gewählt wird, daß ein ausreichend niedriger Druck in der Spachtelkammer, der eine Verdampfung der Flüssigkeit erlaubt, gehalten wird.

34. Verfahren nach Anspruch 33, dadurch gekennzeichnet, daß auf einen Durchmesser in der Spachtelstufe übergegangen wird, der zwei- bis dreimal dem der Extruderschnecke entspricht.

35. Verfahren zum Kochextrudieren von Biopolymeren, dadurch gekennzeichnet, daß die zur Kochextrusion notwendigen Voraussetzungen, nämlich Druck, Temperatur, Verflüssigung und Homogenisierung ausschließlich durch eine oder mehrere Spachtelpumpen aufgebracht werden, wobei jede Spachtelpumpe aus einer Lochmatrize und einem zugeordneten Spachtelelement besteht, und der Anstellwinkel des Spachtelelementes bzw. der Spachtelfläche gegenüber der Lochmatrize - in Bewegungsrichtung der Spachtelarme gesehen - ein spitzer Winkel ist.

36. Kochextruder nach einem der Ansprüche 1 bis 22 dadurch gekennzeichet, daß der Kochextruder als Doppelschneckenextruder ausgebildet ist.

## Claims

1. Cooker-extruder comprising a feeding hopper, at least one screw or a double-screw as well as a nozzle for the production of thermally treated biopolymers, characterized by at least one spatula-pump (22/124; 32/34; 50/52; 80/122; 100; 122; 126/128..) arranged between the screw respectively between the screws (10; 65 ...) and the nozzle (16; 69 ...) each spatula-pump comprising one matrix or plate with holes (22; 122; 34; 50; 122/1; 122/2; 122; 124 ...) and at least one associated spatula element (24; 32; 52; 70; 65; ...) defined as "spatula-pump", the spatula element rotating at an acute angle between 0 and 90 degrees with regard to the matrix or plate with holes as seen in the direction of movement of the spatula element, such that the material being treated is subjected to a pumping effect.

2. Cooker-extruder according to claim 1, characterized by at least two such, so called, spatula-pumps (22/24; 22/24 ... 65/122/1-70-122/2; 65/122; 80/122) between the screw respectively the screws (10 ...) and the nozzle (16 ...).

3. Cooker-extruder according to claim 1, characterized in that the end-surface of the end of the screw respectively the screws (10 ...) at the nozzle-side is formed like a spatula and is of a design such that it passes over a plate of holes (120 ... ).

4. Cooker-extruder according to one of the preceding claims, characterized in that the spatula-pumps consisting each of a plate of holes (22 ...) and a spatula element (24 ...) are mounted upon a shaft together with the screw respectively the screws (10; 13) and in extension thereof.

5. Cooker-extruder according to one of the preceding claims, characterized in that the spatula-pumps have drives independent of each other.

6. Cooker-extruder according to one of the preceding claims, characterized in that the numerous holes (130) with good heat transer properties provided in the matrix of holes or plates (122') provide channels (132) for steam/cooling water or a thermo-oil (Fig. 9).

7. Cooker-extruder for the production of thermally treated biopolymers according to one of the preceding claims, characterized in that the extruder screw respectively the extruder screws are operated as simple conveyor screws having pre-compression and at least one spatula-pump following between the screw respectively screws and the nozzle each consisting of a matrix of holes and an associated spatula element (definition of a spatula-pump).

8. Cooker-extruder according to claim 1, characterized in that the cooker-extruder consists but of a series of the so-called spatula-pumps, each series of which is arranged vertically and the screw or the screws exclusively serve as a feed screw.

9. Cooker-extruder according to one of the preceding claims, characterized in that the spatula surfaces are constructed straight, curved or profiled and rotating over the matrix of holes.

10. Cooker-extruder according to claim 9, characterized in that the spatula elements, respectively twirling arms, passing over the plate with holes which for example are positioned perpendicular to the axis of drive of the twirling type spatula-pump, having round cross sections and are formed like a cylindrical or conically shaped roller tapering towards its outside.

11. Cooker-extruder according to one of the preceding claims, characterized in that the surface of the spatula surface is as smooth as possible, i.e. of minimum friction and that the surface of the matrix of holes (plate) is as rough as possible, i.e. of high friction.

12. Cooker-extruder according to one of the preceding claims, characterized in that these extruder tools, especially the extruder cylinder and possibly the screw respectively the screws, the nozzle etc. are manufactured from steel, cast iron or any other materials non-critical from the "food" point of view.

13. Cooker-extruder according to one of the preceding claims, characterized in that the spatula-stages are designed as modules each.

14. Cooker-extruder according to one of the preceding claims, characterized in that the individual spatula-stages are designed to be combinable as a module system.

15. Cooker-extruder according to one of the preceding claims, characterized in that the matrix of holes on the flow incoming side are designed to give a ball dome and that the associated spatula-element(s) are of a shape complementary immediately opposite to the dome-shaped ball (Kalotte) and are contouring its shape.

16. Cooker-extruder according to one of the preceding claims, characterized in that on the extended axis of the screw respectively screws with a screw end shaped in the form of a spatula head, a plane matrix with holes, particularly with holes parallel to the axis and having a widening at the inflow side, is located.

17. Cooker-extruder according to claim 16, characterized in that three further spatula stages, following this matrix of holes, each comprising a matrix (22) and one spatula element (24) are located, the spatula element being in form of a rotating propeller (32; 56).

18. Cooker-extruder according to claim 17, characterized in that following this matrix of holes (34) another ring-shaped matrix of holes in the shape of the inside of a hat, is located, which together form a hollow spatula space (20), within which a rotating spatula element (40) which passes over the ring matrix, is located.

19. Cooker-extruder according to claim 16, characterized in that following on this shaft a conical matrix of holes (50), having particularly openings (58) parallel to the axis, possibly with widenings at the inflow side, is located, whereby in the spatula space (54), formed by the hollow conical matrix of holes, a frustrum-shaped spatula element (52) filling the spatula chamber (54) is arranged, passing over the openings (68) of the matrix of holes (50) at its inner side.

20. Cooker-extruder according to one of the preceding claims, characterized in that the diameter relationship of the screw outer diameter to the spatula element head and/or matrix of holes is between 1 : 2,0 - 3,0.

21. Cooker-extruder according to one of the preceding claims, characterized in that the elements (100) passing over the plate-with-holes are conical elements tapering from the inside to the outside and being rotatable about their own axis, the matrix of holes on their top side being designed in a complementary manner, i.e. such that they (104) widen from inside towards outside.

22. Cooker-extruder according to one of the preceding claims, characterized by a central passage for the shaft(s) through the matrix of holes for centering of the screw (114 ...), the screw(s) having an extremely small flight depth, particularly having a relation of flight depth to screw diameters of between 1/20 and 1/50.

23. Cooker-extruder having a feeding hopper as well as a nozzle for the production of thermally processed biopolymers, characterized in that the cooker-extruder is of vertical and multistage construction with spatula-pumps, each spatula-pump consisting of a matrix of holes and an associated spatula element, the inclination angle of the spatula element respectively the spatula surface with regard to the matrix of holes - seen in the moving direction of the spatula arms - is an acute angle and the cooker-extruder provides different chamber volumes (G; M; K; W) in the direction of mass flow, and that also the inclined spatula elements (130'; 130''; 130''') in their dimensions are of correspondingly smaller dimensions.

24. Cooker-extruder according to claim 23, characterized in that some of the spatula elements are cylindrical rollers (141), that particularly in the first stage are rotatable.

25. Cooker-extruder with feeding hopper (67''') and a nozzle (159) of single stage construction, characterized in that it is designed similarily to a pellet press with rotating cylinder rollers (150) located perpendicular to a vertical shaft (156), whereby the rollers roll or pass over the matrix of holes (158) and the nozzle is located behind the matrix of holes in such a way dough liquifies in front of the rollers or other similar elements and behind the rollers and on the outflow side behind the matrix of holes (158) an evaporation and a part backflow may be produced.

26. Process for cooking-extrusion of biopolymers, characterized in that in a cooker-extruder according to claim 1, the conveying pressure of a screw, the mass flow of a material to be extruded, the temperature in respectively of an extruder, above all, however, the pressure before and behind a matrix of holes respectively the spatula element passing over it, are chosen in a way that behind the spatula element in the spatula chamber a zone of low pressure and evaporation of the liquid contained in the mass to be extruded in front of the spatula element in the stow region of the plate with holes a pressure build up and a liquefication of the fluid vapour, specially steam, is caused.

27. Process according to claim 26, characterized in that behind the passage through each matrix of holes of a spatula pump stage, the material is opposed to a pressure compressing the material into a liquid mass.

28. Process according to claim 27, characterized in that the extruder is operated to give a pressure difference of 10 : 1 between the area in front of the spatula element or in front of the screw head wedge surface and in the area behind the spatula element, the lower range being below boiling conditions.

29. Process according to one of claims 24 to 28, characterized in that a maximum possible pressure difference is created across the spatula-pump stage keeping in mind the extruder parameters as well as the material to be extruded.

30. Process according to one of claims 28 or 29, characterized in that in the region of the matrix of holes the liquefied material is set into an oscillating motion.

31. Process according to one of claims 26 to 30, characterized in that one works with a process volume of about 200 cm³ per spatula-pump stage, at a mass flow of 200 to 350 kg/hr and a resulting residence time of 2 to 4 seconds.

32. Process for cooking-extrusion of biopolymers for the production of food granulates, snack products or cereals, characterized in that the biopolymer is fed to two spatula-stages and after pressure buildup in front of the nozzle it is pressed through the nozzle, each spatula-stage consisting of a matrix with holes and an associated spatula element, the inclination angle of the spatula element respectively of the spatula surface with regard to the matrix of holes - seen in the moving direction of the spatula arms - is an acute angle and the extrusion operation is vertical.

33. Process according to one claims 26 to 32, characterized in that one works with a spatula element which is so large in diameter as compared with the outer diameter of the extruder screw that a sufficiently low pressure is maintained in the spatula chamber allowing an evaporation of the liquid.

34. Process according to claim 33, characterized in that in the spatula-stage transition is made to a diameter corresponding to 2-3 times that of the extruder screw.

35. Method for cooking extrusion of biopolymers, characterized in that the preconditions necessary for cooking extrusion, i.e. pressure, temperature, liquefication and homogenisation exclusively are caused by one or more spatula pumps, each spatula pump consisting of a matrix with holes and an associated spatula element and the inclination angle of the spatula element respectively the spatula surface with regard to the matrix with holes - seen in moving direction of the spatula arms - is an acute angle.

36. Cooker-extruder according to one of claims 1 to 22, characterized in that the cooker-extruder is in the form of a double-screw extruder.

## Revendications

1. Extrudeuse à cuisson comportant une trémie de chargement, comportant une vis ou une double vis ainsi qu'une buse pour la fabrication de biopolymères traités thermiquement, caractérisée par au moins une pompe à racle (22/124; 32/34; 50/52; 80/122; 100; 122; 126/128 ...) entre la ou les vis (16; 65 ...) et la buse (16; 69 ...), qui est constituée respectivement par une matrice (22; 122; 34; 50; 122/1; 122/1; 122/2; 122; 124 ...) pourvue de trous et au moins un élément associé formant racle (24; 32; 52; 70; 65; ...), défini en tant que "pompe à racle", l'élément formant racle tournant sous un angle aigu compris entre 0 et 90 degrés par rapport à la matrice pourvue de trous, lorsqu'on regarde dans la direction de déplacement de l'élément formant racle, de telle sorte que le matériau traité est soumis à une action de pompage.

2. Extrudeuse à cuisson selon la revendication 1, caractérisée par au moins deux pompes dites à racle (22/24; 22/24 ... 65/122/1-70-122/2; 65/122; 80/122) entre la ou les vis (10 ...) et la buse (16 ...).

3. Extrudeuse à cuisson selon la revendication 1, caractérisée en ce que la surface frontale de l'extrémité, située du côté buse, de la ou des vis (10) est agencée sous la forme d'une racle et possède une forme de réalisation telle qu'elle balaye une plaque (120 ...) pourvue de trous.

4. Extrudeuse à cuisson selon l'une des revendications précédentes, caractérisée en ce que les pompes à racle, constituée chacune par une plaque pourvue de trous (22 ...) et un élément formant racle (24 ...), sont montées sur un arbre (18) équipé de et dans le prolongement de la ou des vis (10; 13).

5. Extrudeuse à cuisson selon l'une des revendications précédentes, caractérisée en ce que les pompes à racle possèdent des dispositifs d'entraînement indépendants les uns des autres.

6. Extrudeuse à cuisson selon l'une des revendications précédentes, caractérisée en ce que les matrices pourvues de trous (122'), qui, en raison des nombreux perçages (130) présentent une bonne transmission de chaleur, comportent des canaux (132) pour de la vapeur / de l'eau de refroidissement ou une huile formant fluide caloporteur (figure 9).

7. Extrudeuse à cuisson pour fabriquer des biopolymères traités thermiquement selon l'une des revendications précédentes, caractérisée en ce que la ou les vis de l'extrudeuse sous la forme d'une ou de simples vis d'amenée fonctionnent avec une prédensification et que la ou les vis sont suivies par au moins une pompe à racle située entre la ou les vis et la buse et qui est / sont constituée(s) par une matrice pourvue de trous et un élément associé formant racle (définition de la pompe à racle).

8. Extrudeuse à cuisson selon la revendication 1, caractérisée en ce que l'extrudeuse à cuisson est constituée uniquement par un montage en série de pompes à racle, le montage en série de pompes à racle étant disposé verticalement et la ou les vis étant utilisées exclusivement en tant que vis d'amenée.

9. Extrudeuse à cuisson selon l'une des revendications précédentes, caractérisée en ce que la surface de la racle est rectiligne, cintrée ou profilée de manière à tourner au-dessus de la matrice perforée.

10. Extrudeuse à cuisson selon la revendication 9, caractérisée en ce que la ou les plaques pourvues de trous balayent les éléments formant racles ou des bras mélangeurs, qui sont disposés par exemple perpendiculairement à l'axe d'entraînement de l'agencement en forme de mélangeur, de la pompe à racle, ont une section transversale circulaire et sont agencés à la manière d'un rouleau cylindrique ou d'un rouleau conique qui se rétrécit vers l'extérieur.

11. Extrudeuse à cuisson selon l'une des revendications précédentes, caractérisée en ce que la surface de la face de la racle est aussi lisse que possible, c'est-à-dire fournit un faible frottement et que la surface de la matrice pourvue de trous est aussi rugueuse que possible, c'est-à-dire fournit un frottement élevé.

12. Extrudeuse à cuisson selon l'une des revendications précédentes, caractérisée en ce que ces outils d'extrusion, notamment le cylindre d'extrusion, éventuellement la ou les vis, la buse, etc., sont réalisés en acier, en fonte ou en un autre matériau qui n'est pas nocif pour des denrées alimentaires.

13. Extrudeuse à cuisson selon l'une des revendications précédentes, caractérisée en ce que les étages de racles sont agencés respectivement sous la forme d'un module.

14. Extrudeuse à cuisson selon l'une des revendications précédentes, caractérisée en ce que les différents étages de racles sont agencés de manière à pouvoir être combinés selon un système modulaire.

15. Extrudeuse à cuisson selon l'une des revendications précédentes, caractérisée en ce que les matrices pourvues de trous sont agencées, du côté de l'arrivée de l'écoulement, sous la forme d'une calotte sphérique et que le ou les éléments associés formant racles sont agencés avec une configuration complémentaire de la calotte sphérique, en étant placés directement en vis-à-vis de cette dernière et avec un contour adapté.

16. Extrudeuse à cuisson selon l'une des revendications précédentes, caractérisée en ce que sur un axe qui prolonge la ou les vis avec une extrémité de la vis agencée sous la forme d'une tête de racle, est disposée une matrice plane pourvue de trous, qui comporte notamment des trous parallèles à l'axe et présentant un élargissement du côté de l'arrivée de l'écoulement.

17. Extrudeuse à cuisson selon la revendication 16, caractérisée en ce qu'à la suite de cette matrice pourvue de trous sont disposés trois autres étages de racles, constitués chacun par une matrice (22) formée de trous et un élément formant racle (24), l'élément formant racle étant agencé sous la forme d'une roue à ailettes rotative (32; 56).

18. Extrudeuse à cuisson selon la revendication 17, caractérisée en ce qu'à la suite de cette matrice pourvue de trous est disposée une matrice annulaire intérieurement creuse (34) pourvue de trous, en forme de chapeau, qui forme une chambre vide (20) pour la racle, à l'intérieur de laquelle est disposé un élément formant racle rotatif (40) qui balaye la matrice annulaire.

19. Extrudeuse à cuisson selon la revendication 16, caractérisée en ce que sur cet arbre est disposée, à la suite, une matrice conique (50) pourvue de trous, qui comporte notamment des ouvertures (58) parallèles à l'axe, pourvues éventuellement d'élargissements situés du côté de l'arrivée de l'écoulement, et que dans la chambre (54) pour la racle, qui est formée par la matrice conique creuse pourvue de trous, est disposé un élément formant racle (52) de forme tronconique, qui remplit la chambre (54) logeant la racle et qui balaye intérieurement les ouvertures (68) de la matrice (50) pourvue de trous.

20. Extrudeuse à cuisson selon l'une des revendications précédentes, caractérisée en ce que le rapport du diamètre extérieur de la ou des vis à celui de la tête de l'élément formant racle et/ou à la matrice pourvue de trous est compris entre 1:2,0 - 3,0.

21. Extrudeuse à cuisson selon l'une des revendications précédentes, caractérisée en ce que les éléments (100) balayant la plaque pourvue de trous sont des éléments coniques, qui se rétrécissent de l'intérieur vers l'extérieur et peuvent éventuellement tourner autour de leur propre axe, la matrice pourvue de trous étant agencée avec une forme complémentaire au niveau de sa face supérieure, c'est-à-dire en s'élargissant (104) de l'intérieur vers l'extérieur.

22. Extrudeuse à cuisson selon l'une des revendications précédentes, caractérisée par un passage central d'arbre qui traverse la matrice pourvue de trous pour réaliser le centrage (114 ...) de la ou des vis, la ou les vis possédant une profondeur de filetage extrêmement faible, avec notamment un rapport de la profondeur de filetage au diamètre de la ou des vis compris entre 1/20 et 1/50.

23. Extrudeuse à cuisson comportant une trémie de chargement ainsi que des buses, pour la fabrication de biopolymères traités thermiquement, caractérisée en ce que l'extrudeuse à cuisson est agencée verticalement et à plusieurs étages comportant des pompes à racle, chaque pompe à racle étant constituée par une matrice pourvue de trous et un élément associé formant racle, et l'angle d'attaque de l'élément formant racle ou de la surface de racle par rapport à la matrice pourvue de trous - vu dans la direction de déplacement des bras de racle - étant un angle aigu, et l'extrudeuse à cuisson comportant des chambres ayant différents volumes (G; M; K; W) et adaptées pour réaliser une densification croissante dans la direction d'entraînement de la masse de matière, et que les éléments utilisés formant racles (130'; 130''; 130''') sont conçus avec des dimensions qui diminuent de façon correspondante.

24. Extrudeuse à cuisson selon la revendication 23, caractérisée en ce que quelques-uns des éléments formant racles sont des rouleaux cylindriques (141), qui sont agencés notamment de manière à pouvoir tourner dans le premier étage.

25. Extrudeuse à cuisson comportant une trémie de chargement (67''') et une buse (159) selon un agencement à un étage, caractérisée en ce que dans sa forme de réalisation en tant que presse pour fabriquer des comprimés, elle comporte des rouleaux cylindriques rotatifs (150), qui prennent appui sur un arbre vertical (156), perpendiculairement à ce dernier, les rouleaux roulant sur une matrice (158) pourvue de trous ou balayant cette matrice, tandis qu'une buse est disposée en aval de la matrice pourvue de trous de telle sorte que sur le côté d'arrivée de l'écoulement en avant des rouleaux, des éléments d'attaque ou analogues, la pâte est fluidisée, tandis qu'en arrière du rouleau et sur le côté aval en arrière de la matrice (158) pourvue de trous, une évaporation et un reflux partiel peuvent être exécutés.

26. Procédé d'extrusion avec cuisson de biopolymères, caractérisé en ce que dans une extrudeuse à cuisson selon la revendication 1, la pression d'entraînement d'une vis sans fin, le débit massique d'un matériau devant être extrudé, la température dans l'extrudeuse ou dans une extrudeuse, mais avant tout la pression en avant et en arrière d'une matrice pourvue de trous ou de l'élément formant racle qui la balaye, sont choisies de telle sorte qu'en arrière de l'élément formant racle dans la chambre contenant la racle il s'établit une zone à faible pression avec évaporation du liquide, qui est contenu dans la masse à extruder, qu'une pression s'établit en avant de l'élément formant racle dans la zone de refoulement de la plaque pourvue de trous et qu'il se produit une liquéfaction de la vapeur du liquide, notamment de la vapeur d'eau.

27. Procédé selon la revendication 26, caractérisé en ce qu'après avoir franchi chaque matrice pourvue de trous d'un étage de la pompe à racle, le matériau est soumis à une pression qui le densifie pour l'amener sous la forme d'une masse liquide.

28. Procédé selon la revendication 27, caractérisé en ce qu'on fait fonctionner l'extrudeuse avec une différence de pression entre la zone située en avant de l'élément formant racle ou en avant de la surface en coin de la tête de vis et de la pression dans une zone située en arrière de l'élément formant racle, égale à 10:1, la zone inférieure étant située dans des conditions inférieures aux conditions d'ébullition.

29. Procédé selon l'une des revendications 24 à 28, caractérisé en ce qu'une différence de pression maximale possible est provoquée par l'intermédiaire de l'étage de la pompe à racle, compte tenu des paramètres d'extrudeuse ainsi que de la prise en compte du matériau devant être extrudé.

30. Procédé selon l'une des revendications 28 ou 29, caractérisé en ce que le matériau liquéfié est déplacé selon un déplacement oscillatoire dans la zone de la matrice pourvue de trous.

31. Procédé selon l'une des revendications 26 à 30, caractérisé en ce qu'on travaille avec un volume de traitement d'environ 200 cm³ pour chaque étage de la pompe à racle, pour un débit massique de 200 à 350 kg/h et avec un temps de séjour en résultant compris entre 2 et 4 secondes.

32. Procédé pour réaliser l'extrusion avec cuisson de biopolymères pour fabriquer des granulés de denrées alimentaires, des produits pour de collation légère ou des céréales, caractérisé en ce qu'on envoie le biopolymère à deux étages de racles et qu'après l'établissement de la pression en avant de la buse, on le refoule à travers la buse, chaque étage à racle étant constitué par une matrice pourvue de trous et un élément associé formant racle, que l'angle d'attaque de l'élément formant racle ou de la surface de racle par rapport à la matrice pourvue de trous - vu dans la direction de déplacement des bras de racle - fait un angle aigu et que le processus d'extrusion est exécuté verticalement.

33. Procédé selon l'une des revendications 26 à 32, dans lequel on travaille avec un élément formant racle dont le diamètre est choisi suffisamment grand par rapport au diamètre extérieur de la vis d'extrudeuse pour qu'une pression suffisamment faible soit maintenue dans la chambre à racle, qui permet une évaporation du liquide.

34. Procédé selon la revendication 33, caractérisé en ce qu'on passe, dans l'étage à racle, à un diamètre qui correspond à un diamètre compris entre le double et le triple de celui de la vis d'extrudeuse.

35. Procédé pour extruder avec cuisson des biopolymères, caractérisé en ce que les conditions nécessaires pour l'extrusion avec cuisson, à savoir la pression, la température, la liquéfaction et l'homogénéisation sont produites exclusivement par une ou plusieurs pompes à racle, chaque pompe à racle étant constituée par une matrice pourvue de trous et par un élément associé formant racle, et que l'angle d'attaque de l'élément formant racle ou de la surface de racle par rapport à la matrice pourvue de trous - vu dans la direction de déplacement des bras de racle - est un angle aigu.

36. Extrudeuse à cuisson selon l'une des revendications 1 à 2, caractérisée en ce que l'extrudeuse à cuisson est agencée sous la forme d'une extrudeuse à deux vis.
